# EUROPEAN PATENT APPLICATION

(11) **EP 2 407 791 A1**
(43) Date of publication of application: **18.01.2012**
(21) Application number: 10750825.1
(22) Date of filing: 09.03.2010
(51) Int. Cl.: G01N 35/10

(54) **ANALYZER AND METHOD FOR CLEANING DISPENSER PROBE**

(30) Priority: 13.03.2009 JP 2009061733
(71) Applicant: Beckman Coulter, Inc., Brea, CA 92821 (US)
(72) Inventor: KURODA, Akihisa, Sunto-gun Shizuoka 411-0931 (JP)
(74) Representative: Müller-Boré & Partner Patentanwälte
(86) International application number: PCT/JP2010/053883
(87) International publication number: WO 2010/104072

(57) **Abstract**

The analyzer (**1**) of the present invention comprises: a reading section (**23**) for storing or obtaining specimen information including a sample type of a specimen, and specimen container information; a liquid level detecting section (**51**) for detecting a liquid level and/or an interface of the specimen; a dispensing apparatus (**5**) for dispensing a specimen; a washing apparatus (**6**) for washing a dispensing probe (**50**); a calculating section (**202**) for calculating a contamination adhering range of an external wall surface of the dispensing probe (**50**), based on the sample type, specimen suctionposition and specimen container information stored or obtained by the reading section (**23**), as well as liquid level and/or interface information of the specimen detected by the liquid level detecting section (**51**); and a washing control section (**200**) for controlling a washing range based on the contamination adhering range.

## Description

### TECHNICAL FIELD

The present invention relates to an analyzer for analyzing a blood sample and a method for washing a dispensing probe.

### BACKGROUND ART

Conventionally, blood sugar and hemoglobin A1c (HbAlc) have been used as diagnostic markers of diabetes. In automatic analyzers, a blood sample drawn from a subject is separated into blood plasma and blood cells by means of centrifugation to analyze blood sugar from the blood plasma sample, and hemoglobin A1c from the blood cell sample. Alternatively, analysis is performed with specimens dispensed from whole blood in order to analyze a red blood cell component, hemoglobin A1c. For the dispensing and analyzing of a specimen, which is separated into layers of blood plasma and blood cells, or a whole blood specimen, together with a blood plasma (blood serum) specimen or the like using one automatic analyzer, an important problem to be solved is to prevent carryover to other specimens. To that end, an automatic analyzer is proposed, which is capable of selecting washing ranges of a dispensing pipette for two stages, based on a contaminant range of the dispensing pipette during the dispensation (see, for example, Patent Literature 1).

### [Citation List]

### [Patent Literature]

Patent Literature 1: Japanese Laid-Open Publication No. 2002-40035

### DISCLOSURE OF THE INVENTION

### [Summary of Invention]

### [Technical Problem]

In the analyzer disclosed in Patent Literature 1, the length of a sample diluting pipette inserted into a specimen in a sample container is different in the case where the sample dilutingpipette sucks bloodplasma from a specimen, which is separated into layers of blood plasma and blood cells, from the case where the sample diluting pipette sucks out the blood cells. Thus, the adhesion ranges of bloodplasma and specimens adhered to an external wall of the sample diluting pipette are also different from one another. Accordingly, the analyzer is configured to be able to select and control a washing range of the sample diluting pipette after the suction of blood plasma as well as a washing range of the sample diluting pipette after the suction of blood cells, though the analyzer can only select the washing range based on the contamination range. Even if the type of adhered samples is different, such as if blood plasma is adhered in a wide range, if whole blood is adhered in a wide range, or if a specimen, which is separated into layers of blood plasma and blood cells, is adhered in a wide range, the sample diluting pipette will be washed under the same washing conditions. Under the washing conditions for handling the most severe contamination, the extended washing time and consumption of a large amount of washing water become problematic.

The present invention is intended to solve such a problem as described above. It is an objective of the present invention to provide: an analyzer and a method for washing a dispensing probe, capable of controlling washing conditions of a dispensing probe, based on the type of contamination or the like adhered to the dispensing probe, to shorten the total washing time and reduce the amount of washing water to be used.

### [Solution to Problem]

An analyzer according to the present invention is capable of analyzing different samples as a specimen, the analyzer optically analyzing a reactant of the specimen and a reagent, characterized in comprising: an analysis information obtaining section for storing or obtaining specimen information including a sample type of the specimen and a specimen suction position, and specimen container information; a liquid level estimating section for estimating a liquid level and/or an interface of the specimen; a dispensing section for dispensing the specimen using a dispensing probe; a washing section for washing the dispensing probe; a calculating section for calculating a contamination adhering range of an external wall surface of the dispensing probe, basedon the sample type, the specimen suction position, and the specimen container information stored or obtained by the analysis information obtaining section as well as liquid level and/or interface information of the specimen estimated by the liquid level estimating section; and a washing control section for controlling a washing range of the dispensing probe, based on the contamination adhering range of the external wall surface of the dispensing probe calculated by the calculating section, thereby achieving the objective described above.

Further, an analyzer according to the present invention is capable of analyzing different samples as a specimen, the analyzer optically analyzing a reactant of the specimen and a reagent, characterized in comprising: an analysis information obtaining section for storing or obtaining specimen information including a sample type of the specimen and a specimen suction position; a liquid level detecting section for detecting a liquid level and/or an interface of the specimen; a dispensing section for dispensing the specimen using a dispensing probe; a washing section for washing the dispensing probe; a calculating section for calculating a contamination adhering range of an external wall surface of the dispensing probe, based on the sample type, the specimen suction position, and the specimen container information stored or obtained by the analysis information obtaining section as well as liquid level and/or interface information of the specimen detected by the liquid level detecting section; and a washing control section for controlling a washing range of the dispensing probe, based on the contamination adhering range of the external wall surface of the dispensing probe calculated by the calculating section.

In the invention described above, the analyzer according to the present invention is **characterized in that** the washing control section controls a lowering speed of the dispensing probe into the washing section based on the sample type of the specimen.

In the invention described above, the analyzer according to the present invention is **characterized in that** the specimen information includes a sample type, sample viscosity, a specimen dispensing amount, a specimen suction position and an analysis menu information.

In the invention described above, the analyzer according to the present invention is **characterized in that** the washing control section controls the lowering speed of the dispensing probe in accordance with a viscosity category of the specimen.

In the invention described above, the analyzer according to the present invention is **characterized in that** the washing section comprises: a washing vessel having an opening at an upper part thereof, the opening allowing the dispensing probe to be inserted therein; a spout washing water supplying section for spouting washing water in a region of the upper part of the washing vessel; and a washing water controlling section for controlling the amount of the washing water spouted from the spout washing water supplying section based on the sample type of the specimen to be washed.

In the invention described above, the analyzer according to the present invention is **characterized in that** the washing section comprises: a reservoir vessel for allowing overflow the washing water, the reservoir vessel having an opening at an upper part thereof for allowing the dispensing probe to be inserted therein; an overflow vessel for discharging the overflow washing water from the reservoir vessel; a reserve washing water supplying section for supplying the washing water to the reservoir vessel; and a washing water controlling section for controlling the amount of the washing water supplied from the reserve washing water supplying section based on the sample type of the specimen to be washed.

In the invention described above, the analyzer according to the present invention is **characterized in that** the washing water controlling section controls at least the reservoir vessel to be in an overflow state before an extrusion liquid, which is discharged from the dispensing probe to wash an internal wall surface thereof at an upper part of the reservoir vessel, falls and reaches the washing water reserved in the reservoir vessel.

In the invention described above, the analyzer according to the present invention is **characterized in that** the washing water controlling section controls at least the reservoir vessel to be in an overflow state before a tip of the dispensingprobe is dipped in the washing water reserved in the reservoir vessel by the lowering of the dispensing probe into the washing section.

In the invention described above, the analyzer according to the present invention is **characterized in that** an opening of the overflowvessel is formed to have an inclined surface, which inclines downwardly from the opening of the reservoir vessel.

In the invention described above, the analyzer according to the present invention is **characterized in that** the washing water controlling section performs a control to allow the washing water reserved in the reservoir vessel to overflow before the extrusion liquid discharged from the dispensing probe for washing the internal wall surface thereof falls into and reach the washing water, and after the discharging of the extrusion liquid for washing the internal wall surface from the dispensing probe ends, the washing water controlling section performs a control to allow the washing water reserved in the reservoir vessel to stop overflowing after the discharged extrusion liquid falls and reaches the washing water.

In the invention described above, the analyzer according to the present invention is **characterized in that** the washing water controlling section performs a control to resume the overflow before the dispensing probe is lowered in the washing section and the tip of the dispensing probe is dipped in the washing water reserved in the reservoir vessel, and the washing water controlling section performs a control to stop the overflow before the dispensing probe is pulled up from the reservoir vessel.

In the invention described above, the analyzer according to the present invention is **characterized in that** the analyzer comprises a spout washing water supplying section for spouting washing water in an upper part region of the washing vessel.

In the invention described above, the analyzer according to the present invention is **characterized in that** the washing water controlling section controls the washing water spouted from the spout washing water supplying section to allow at least the reservoir vessel to be in an overflow state when the washing water falls into the reservoir vessel.

In the invention described above, the analyzer according to the present invention is **characterized in that** the washing control section selects, for performing washing, washing by washing-water spouting by the spout washing water supplying section and/or dip-washing with the washing water reserved in the reservoir vessel, in accordance with the sample type dispensed by the dispensing probe.

In the invention described above, the analyzer according to the present invention is **characterized in that** the calculating section calculates a specimen contamination range of each layer of the external wall surface of the dispensing probe, based on a suction position of each layer of the specimen which is separated into layers, and the specimen container information, stored or obtained by the analysis information obtaining section, as well as liquid level position information of each layer of the specimen which is separated into layers, detected by the liquid level detecting section; the washing control section controls an insertion distance or the lowering speed of the dispensing probe to the washing section in accordance with the specimen contamination range of each layer calculated by the calculating section; and/or the washing water controlling section controls the amount of the washing water.

In the invention described above, the analyzer according to the present invention is **characterized in that** the liquid level detecting section comprises: a liquid level detecting part for detecting a liquid level from the change in capacitance between the dispensing probe and a metal plate disposed in the periphery of a specimen container; and an interface detecting section for detecting a pressure during ascent or descent while performing suction of the dispensing probe in the specimen using a pressure detecting section within the dispensing probe, to detect an interface of the specimen which is separated into layers in a specimen container, based on the detected pressure change.

In the invention described above, the analyzer according to the present invention is **characterized in that** the sample type of the specimen is blood plasma, blood serum, whole blood or a specimen which is separated into layers of blood plasma and blood cells.

A method for washing a dispensing probe after dispensation of a specimen according to the present invention is characterized in comprising: a reading step of reading a specimen ID of a specimen to be dispensed and a specimen container ID; an extracting step of extracting analysis menu information including a specimen sample type and a specimen suction position, and specimen container information; a liquid level detecting step of detecting a specimen liquid level; a calculating step of calculating a specimen liquid surface level, a specimen suction level and a contamination adhering range of an external wall surface of a dispensing probe, based on a specimen liquid level position detected at the liquid level detecting step, the sample type, the specimen container information, and the specimen suction position; a sucking step of sucking out a specimen at the specimen suction level; a discharging step of discharging the sucked specimen to a reaction container; and a washing step of washing the dispensing probe by controlling the insertion distance and the lowering speed of the dispensing probe to the washing section and/or the amount of the washing water, based on the sample type of the specimen and the contamination adhering range of the external wall surface of the dispensing probe.

In the invention described above, the method for washing a dispensing probe according to the present invention is **characterized in that** the method comprises an internal wall surface washing step of performing internal wall surface washing by the discharging of an extrusion liquid from the dispensing probe, within the washing section, prior to the washing step.

A method according to the present invention is for washing a dispensing probe after dispensation of a lower layer component of a specimen which is separated into layers, the method characterized in comprising: a reading step of reading a specimen ID of a specimen to be dispensed and a specimen container ID; an extracting step of extracting analysis menu information including a specimen sample type and a specimen suction position for each layer, and specimen container information; a detecting step of detecting a specimen liquid level and an interface; a calculating step of calculating a specimen liquid surface level of each layer, a specimen suction level of each layer and a contamination adhering range of each layer of an external wall surface of a dispensing probe, based on a specimen liquid level position and an interface position detected at the detecting step, the sample type, the specimen container information, and the specimen suction position of each layer; a sucking step of sucking out a lower layer specimen at a lower layer specimen suction level; a discharging step of discharging the sucked specimen to a reaction container; a first washing step of washing the dispensing probe by controlling the insertion distance and the lowering speed of the dispensing probe to the washing section and/or the amount of the washing water, based on the sample type of the lower layer specimen and the contamination adhering range of the lower layer of the external wall surface of the dispensing probe; and a second washing step of washing the dispensing probe by controlling the insertion distance and the lowering speed of the dispensing probe to the washing section and/or the amount of the washing water, based on the sample type of the upper layer specimen and the contamination adhering range of the upper layer of the external wall surface of the dispensing probe.

Further, the method for washing a dispensing probe according to the present invention is **characterized in that** the method comprises an internal wall surface washing step of performing internal wall surface washing by the discharging of an extrusion liquid from the dispensing probe, within the washing section, prior to the first washing step.

### [Advantageous Effects of Invention]

The present invention comprises a washing control section for controlling the lowering speed and inserting distance of the dispensing section in the washing section based on the type of contamination or the like adhered to the dispensing probe, so that the present invention allows washing under optimal washing conditions, thereby cutting the washing time and reducing the amount of washing water.

### BRIEF DESCRIPTION OF THE DRAWINGS

Figure **1** a schematic configuration diagram of an analyzer according to the Embodiments of the present invention.
Figure **2** is a schematic configuration diagram of a specimen dispensing apparatus used in the analyzer in Figure **1****.**
Figure **3** is a schematic configuration diagram of a liquid level detecting section used in the specimen dispensing apparatus in Figure **2****.**
Figure **4** is a schematic configuration diagram of a dispensing probe washing apparatus used in the automatic analyzer in Figure **1****.**
Figure **5** is a flowchart illustrating dispensing operations for dispensing different sample types as specimens.
Figure **6** is a flowchart illustrating dispensing operations of a normal dispensing mode in Figure **5****.**
Figure **7** is a dispensing operation diagram of a case where a blood plasma sample is dispensed.
Figure **8** is a washing operation diagram after a blood plasma sample is dispensed.
Figure **9** is an operation diagram of Variation Example 1 of washing after a blood plasma sample is dispensed.
Figure **10** is an operation diagram of Variation Example 2 of washing after a blood plasma sample is dispensed.
Figure **11** is an operation diagram of Variation Example 3 of washing after a blood plasma sample is dispensed.
Figure **12** is a dispensing operation diagram of a case where a whole blood sample is dispensed.
Figure **13** is a washing operation diagram after a whole blood sample is dispensed.
Figure **14** is a flowchart illustrating dispensing operations of a special dispensing mode in Figure **5****.**
Figure **15** is a graph of pressure change when a dispensing probe is lowered into and sucks out a specimen, which is separated into layers of blood plasma and blood cells.
Figure **16** is a diagram of a dispensing operation for dispensing blood plasma from a sample which is separated into layers of blood plasma and blood cells.
Figure **17** is a diagram of a dispensing operation for dispensing blood cells from a sample which is separated into layers of blood plasma and blood cells.
Figure **18** is a diagram of a washing operation after dispensation of blood cells from a sample which is separated into layers of blood plasma and blood cells.
Figure **19** is a schematic configuration diagram of a variation example of a dispensing probe washing apparatus used in the automatic analyzer in Figure **1****.**
Figure **20** is a schematic configuration diagram of a variation example of a dispensing probe washing apparatus used in the automatic analyzer in Figure **1****.**

### BEST MODE FOR CARRYING OUT THE INVENTION

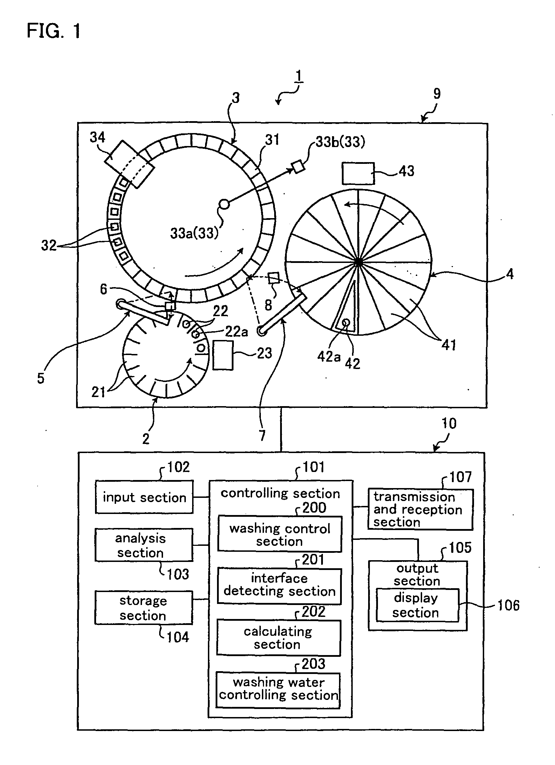

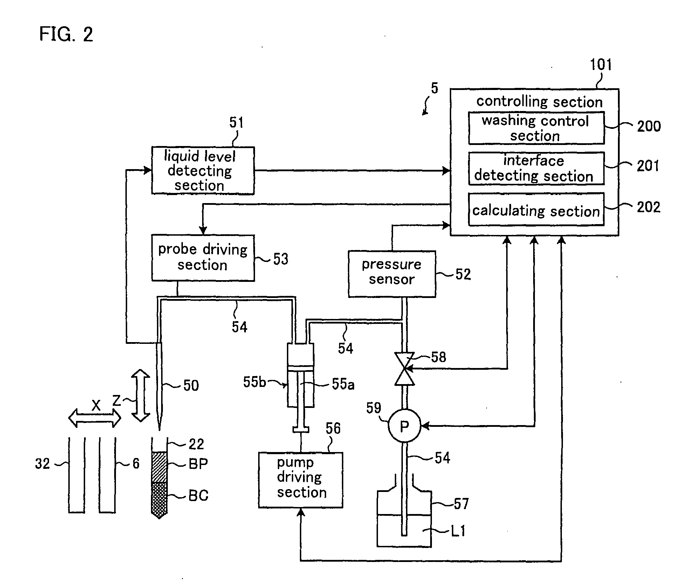

Hereinafter, preferred Embodiments of an analyzer according to the present invention will be described in detail with reference to accompanying figures. Figure **1** is a schematic configuration diagram of an analyzer **1** according to the Embodiments. Figure **2** is a schematic configuration diagram of a specimen dispensing apparatus 5 used in the analyzer **1** in Figure **1****.**

The analyzer **1** comprises a measurement mechanism **9** for measuring light passing through a reactant in between a specimen and a reagent; and a control mechanism **10** for performing the control of the overall analyzer **1** including the measurement mechanism **9** as well as for performing analysis on measurement results of the measurement mechanism **9.** The analyzer **1** automatically performs analysis on a plurality of specimens owing to the cooperation of the two mechanisms.

First, the measurement mechanism **9** will be described. The measurement mechanism **9** broadly comprises: a specimen table **2;** a reaction table **3;** a reagent table **4;** a specimen dispensing apparatus **5;** a reagent dispensing apparatus **7;** and dispensing probe washing apparatuses **6** and **8.**

The specimen table **2** has a disk-shaped table and comprises a plurality of specimen container housing sections **21** arranged at regular intervals along the circumferential direction of the disk-shaped table. A specimen container **22,** containing a specimen, is detachably housed in each of the specimen container housing sections **21.** The specimen container **22** has an opening **22a,** which is upwardly open. The specimen table **2** rotates in the direction indicated by the arrow in Figure **1****,** using a specimen table driving section (not shown), with a vertical line passing through the center of the specimen table **2** as an axis of rotation. As the specimen table **2** rotates, the specimen container **22** is conveyed to a specimen suction position where a specimen is sucked out by the specimen dispensing apparatus **5.**

The specimen container **22** includes an identification label (now shown) adhered thereon. The identification label contains specimen information with regard to the type of the contained specimen and analysis menu therefor. In the meantime, the specimen table **2** comprises a reading section **23** for reading the information of the identification label of the specimen container **22.**

The reaction table **3** has a disk-shaped table and comprises a plurality of reaction container housing sections **31** arranged at regular intervals along the circumferential direction of the disk-shaped table. A transparent reaction container **32** for containing a specimen and a reagent is detachably housed in each of the reaction container housing sections **31,** in such a manner that the transparent reaction container **32** is upwardly open. The reaction table **3** rotates in the direction indicated by the arrow in Figure **1****,** using a reaction table driving section (not shown), with a vertical line passing through the center of the reaction table **3** as an axis of rotation. As the reaction table **3** rotates, the reaction container **32** is conveyed to a specimen discharging position where a specimen is discharged by the specimen dispensing apparatus **5,** and a reagent discharging position where a reagent is discharged by the reagent dispensing apparatus **7.**

A photometry apparatus **33** has a light source **33a** and a light receiving section **33b.** The light source **33a** outputs analysis light with a given wavelength, and the light receiving section **33b** measures a beam of light, which is output from the light source **33a** and is transmitted through a reaction liquid. The reaction liquid is obtained by the reaction of a specimen and a reagent and is contained in the reaction container **32.** The photometry apparatus **33** is arranged such that the light source **33a** and the light receiving section **33b** are positioned opposite each other in a radial direction with the reaction container housing sections **31** of the reaction table **3** interposed therebetween. The reaction table **3** comprises a reaction container washing apparatus **34** for discharging a reaction liquid, which has gone through the measurement, from a reaction container **32,** and for washing the reaction container **32.**

The reagent table **4** has a disk-shaped table and comprises a plurality of reagent container housing sections **41** arranged at regular intervals along the circumferential direction of the disk-shaped table. A reagent container **42** containing a reagent is detachably housed in each of the reagent container housing sections **41.** The reagent container **42** has an opening **42a** which is upwardly open. In addition, the reagent table **4** rotates in the direction indicated by the arrow in Figure **1****,** using a reagent table driving section (not shown), with a vertical line passing through the center of the reagent table **4** as an axis of rotation. As the reagent table **4** rotates, the reagent container **42** is conveyed to a reagent suction position where a reagent is sucked out by the reagent dispensing apparatus **7.**

The reagent container **42** includes an identification label (now shown) adhered thereon. The identification label contains reagent information with regard to the type and the amount of the contained reagent. In the meantime, the reagent table **4** comprises a reading section **43** for reading the information of the identification label of the reagent container **42.**

The specimen dispensing apparatus **5** comprises a dispensing probe for performing suction and discharge of a specimen, attached to a tip portion thereof. The specimen dispensing apparatus **5** also comprises an arm capable of freely ascending and descending in a vertical direction as well as rotating with a vertical line passing through a base section of the arm as a central axis. The specimen dispensing apparatus **5** is provided in between the specimen table **2** and the reaction table **3.** The specimen dispensing apparatus **5** sucks out a specimen in a specimen container **22,** which is conveyed to a given position by the specimen table **2,** using the dispensing probe, turns the arm around, and dispenses the specimen into a reaction container **32,** which is conveyed to a given position by the reaction table **3,** to transfer the specimen into the reaction container **32** on the reaction table **3** at a given timing.

Figure **2** is a schematic configuration diagram of a specimen dispensing apparatus **5.** As illustrated in Figure **2****,** the specimen dispensing apparatus **5** comprises: a dispensing probe **50;** a liquid level detecting section **51;** a probe driving section **53;** a dispensing pump **55;** a pump driving section **56;** a pressure sensor **52;** and a washing water pump **59.**

As illustrated in Figure **2****,** the dispensing probe **50** is connected with the dispensing pump **55,** the pressure sensor **52** and the washing water pump **59,** through tubes **54.** Under the control of a washing control section **200,** the dispensing probe **50** is moved in a horizontal direction as indicated with an arrow **X** and in a vertical direction as indicated with an arrow **Z** in the figure, by the probe driving section **53.** Subsequently, the dispensing probe **50** sucks a specimen from a specimen container **22** successively conveyed below the dispensing probe **50,** and discharges the specimen into a reaction container **32** on the reaction table **3,** so that the specimen is dispensed.

The dispensingpump **55** is a syringepump, which allows the dispensing probe **50** to suck out a specimen in a specimen container **22** and subsequently discharge the sucked specimen into a reaction container **32** conveyed by the reaction table **3.** A piston **55a** thereof is reciprocatively moved by the pump driving section **56.**

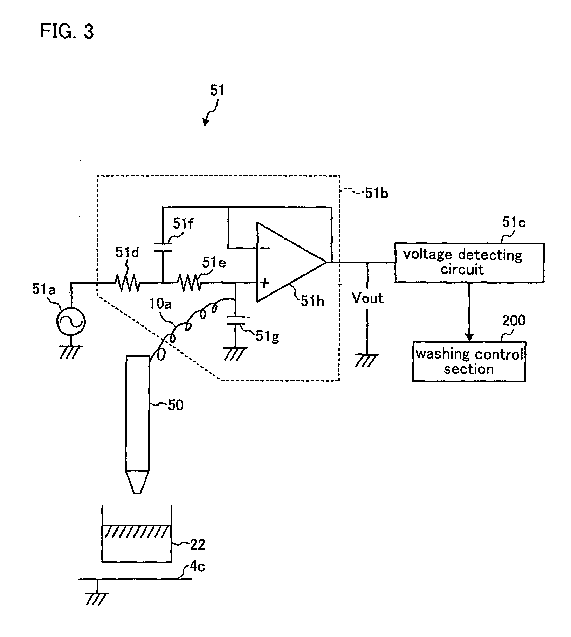

The liquid level detecting section **51** detects an interface of layers of air and a specimen (blood plasma), specifically a specimen (blood plasma) liquid level, using the change in capacitance between the dispensing probe **50** and a metal plate **4c** disposed in the periphery of the specimen container **22.** Figure **3** is a schematic configuration diagram of a liquid level detecting section **51.** An oscillation circuit **51a** produces oscillating AC signals, and inputs the signals to a differential circuit **51b.** As illustrated in Figure **3****,** the differential circuit **51b** has resistances **51d** and **51e,** capacitors **51f** and **51g,** and an operational amplifier **51h,** and is adjusted such that the input sensitivity increases in accordance with frequencies of the oscillating AC signals produced by the oscillation circuit **51a.** The positive side input terminal of the differential circuit **51b** is connected to the dispensing probe **50** via a lead line **10a.** A voltage detecting circuit **51c** is connected to an output terminal of the differential circuit **51b,** and detects output voltage **Vout** of the differential circuit **51b,** and in accordance with the value thereof, detects whether or not a lower end of the dispensing probe **50** has touched the liquid level of a liquid in the specimen container **22.** The differential circuit **51b** is adjusted such that the input sensitivity increases at the frequency of the oscillation circuit **51a,** in accordance with a capacitance value of a state in which the dispensing probe **50** is not in contact with the liquid level of a liquid. Thus, in the adjusted differential circuit **51b,** its sensitivity decreases in accordance with a capacitance value of the state in which the dispensing probe **50** is in contact. Therefore, the voltage detecting circuit **51c** detects a liquid level by the change in the output voltage **Vout.** The output voltage signal detected by the voltage detecting circuit **51c** is output to the washing control section **200,** andaspecimen liquid level position (air-specimen interface) in the specimen container **22** is detected.

A calculating section **202** calculates a specimen liquid surface level and a specimen suction level, based on a liquid level position detected by the liquid level detecting section **51,** specimen container information read by the reading section **23** and a set specimen suction position. The specimen suction position is set for each sample type. For example, when HbAlc is analyzed in a whole blood sample or a blood cell sample, analysis results will be influenced depending on the specimen suction position, and thus, the specimen suction position can be set by a user. In general, the specimen suction position for HbAlc is set to be an intermediate position of the specimen liquid surface level. When a specimen, such as blood plasma, is sucked out, which does not have so much influence on analysis results depending on its specimen suction position, the specimen suction position is set to be near the specimen liquid level position so that the range of an external wall surface of the dispensing probe **50** to which the specimen is adhered will be small. The specimen liquid surface level and the specimen suction level are output to the washing control section **200.** The washing control section **200** then drives and controls the probe driving section **53** to allow the dispensing probe **50,** which is stopped at the specimen liquid level position in the specimen container **22,** to be lowered for a given distance down to the specimen suction level, and the washing control section **200** drives the pump driving section **56** to suck out and take the specimen.

The washing water pump **59** pumps up a degassed extrusion liquid **L1,** which is housed in a tank **57,** and compresses and transports the extrusion liquid **L1** to a tube **54** via an electromagnetic valve **58** provided between the washing water pump **59** and the pressure sensor **52.** In such a process, by way of a control signal from a control section **101,** the electromagnetic valve **58** is switched to "open" when the pumped extrusion liquid **L1** is compressed and transported to the tube **54,** and the dispensing probe **50** sucks out a liquid sample with the dispensing pump **55**. The electromagnetic valve **58** is switched to "closed" when the liquid sample is discharged.

The pressure sensor **52** detects the pressure within the tube **54** and outputs the detected pressure as a pressure signal to an interface detecting section **201** via the control section **101.**

The interface detecting section **201** detects an interface of a specimen, which is separated into layers, based on pressure changes detected by the pressure sensor **52,** such as an interface of a blood plasma layer and a blood cell layer. The interface detecting section **201** is also capable of detecting an interface of air and blood plasma in a similar manner by pressure changes. A computer apparatus, for example, is used for the interface detecting section **201.** The interface detecting section **201** amplifies pressure signals input from the pressure sensor **52** and performs processing for converting the pressure signals (analog) into digital signals. Subsequently, the interface detecting section **201** detects the pressure within the tube **54** from the pressure signals, which are converted into digital signals, to detect an interface position (blood cell liquid level) of a blood plasma layer and a blood cell layer. The calculating section **202** calculates a lower layer specimen (blood cell) liquid surface level and a lower layer specimen (blood cell) suction level, based on the interface position, the specimen container information read by the reading section **23,** and the set specimen suction position. The calculated blood cell liquid surface level and blood cell suction level are output to the washing control section **200,** and the washing control section **200** controls the driving of the probe driving section **53** to allow the dispensing probe **50,** which is stopped at a blood plasma-blood cell interface in the specimen container **22,** to be lowered a given distance down to a blood cell suction level. Subsequently, the pump driving section **56** is driven to suck out and draw a blood cell sample.

When a liquid level of a specimen without a layer separation, such as blood plasma, blood serum or a whole blood specimen, is detected, an air-specimen interface is detected by the liquid level detecting section **51.** An air-specimen (blood plasma) interface of a specimen which is separated into layers of blood plasma, blood cells or the like is detected by the liquid level detecting section **51** or interface detecting section **201.** A blood plasma-blood cell interface is detected by the interface detecting section **201.** Since respective specimen suction positions are determined in accordance with the type of samples, the calculating section **202** calculates a liquid surface level and a specimen suction level based on the liquid level position or interface position detected by the liquid level detecting section **51** or the interface detecting section **201,** and the specimen container information. The calculating section **202** further calculates the range for the dispensing probe **50** to be inserted into a specimen, i.e., contamination adhering range, from the calculated specimen liquid surface level and specimen suction level. In the Embodiments of the present invention, the liquid level and/or interface level are detected by means of a capacitance method (liquid level detecting section **51**) and/or a pressure method (interface detecting section **201**), with a high accuracy of liquid level detection. However, it is also possible to detect a liquid level using a CCD camera, or detect a liquid level and/or an interface level by measuring transmission light, which has passed through a specimen, by a light receiving section, with an LED as a light source, and based on the amount of the transmission light.

After the dispensing of a specimen into a reaction container **32** by the dispensing probe **50,** the washing control section **200** controls a washing range of the dispensing probe **50** within a dispensing probe washing apparatus **6** to be described later. The washing control section **200** controls the washing range by controlling the length of the dispensing probe **50** inserted into the dispensing probe washing apparatus **6** based on the contamination adhering range on the external wall surface of the dispensing probe **50** calculated by the calculating section **202.** Controlling the washing range enables the shortening of the washing time and the reduction in the amount of thewashingwater. The washing control section **200** also controls the lowering speed of the dispensing probe **50** to the dispensing probe washing apparatus **6** based on the sample type of the specimen read by the reading section **23.** It is easier to wash blood plasma samples and blood serum samples than whole blood samples, and it is most difficult to wash blood cell samples. Therefore, the change in the lowering speed of the dispensing probe **50** into the dispensing probe washing apparatus **6** in accordance with the sample type of a specimen to be dispensed, allows the selection of washing conditions in accordance with a washing subject, thereby allowing the shortening of the washing time and the reduction in the amount of the washing water. The lowering speed of the dispensing probe **50** into the dispensing probe washing apparatus **6** is as follows: blood plasma (blood serum) samples > whole blood samples > blood cell samples. For a sample which is more difficult to wash, the lowering speed is further reduced, thereby increasing the effectiveness of the washing. The lowering speed is set such that the washing is completed when the lowering of the dispensing probe **50** into the dispensing probe washing apparatus **6** is stopped. Therefore, the washing is not a mere extension of the length of the washing time, but also the washing is performed largely while the dispensingprobe **50** moves. Compared to the washing wi thout moving of the dispensing probe **50,** the exertion of the maximum washing capability is feasible for the same washing time. For a sample which is separated into layers, the lowering speed is changed to perform the washing in accordance with the type of adhered specimen contamination.

The reagent dispensing apparatus **7** comprises a dispensing probe for sucking out and discharging a reagent, attached to a tip portion thereof. The reagent dispensing apparatus **7** also comprises an arm capable of freely ascending and descending in a vertical direction as well as rotating with a vertical line passing through a base section of itself as a central axis. The reagent dispensing apparatus **7** is provided in between the reagent table **4** and the reaction table **3,** and sucks out a reagent in a reagent container **42** conveyed to a given position by the reagent table **4,** by the dispensing probe, turns the arm around, and dispenses the reagent into a reaction container **32,** which is conveyed to a given position by the reaction table **3,** to transfer the reagent into the reaction container **32** on the reaction table **3** at a given timing.

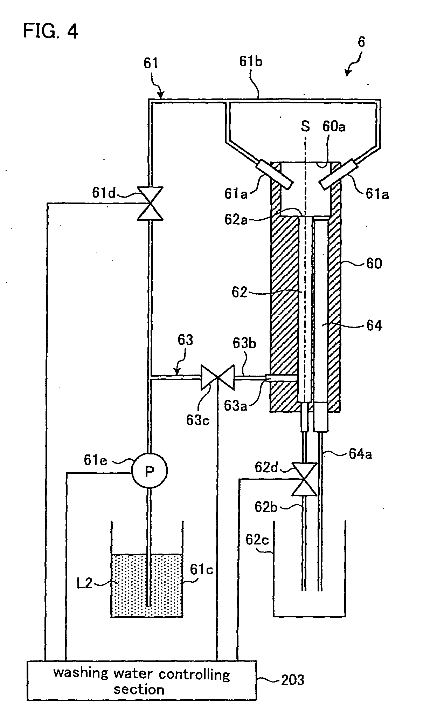

The dispensing probe washing apparatus **6** is provided in between the specimen table **2** and the reaction table **3,** and at a midway position of a locus of the horizontal movement of the dispensing probe **50** in the specimen dispensing apparatus **5.** In order to prevent carryover between specimens, the washing of the dispensing probe **50** is performed by the dispensing probe washing apparatus **6** every time the dispensing of a specimen is performed by the dispensing probe **50.** Figure **4** illustrates a schematic configuration diagram of a dispensing probe washing apparatus **6.** The dispensing probe washing apparatus **6** has a washing vessel **60.** The washing vessel **60** is formed in a tube shape, and has an opening **60a** in the upper part thereof so that a lowering tip of the dispensing probe **50** is inserted therein from the above.

A reservoir vessel **62** of a prism or cylinder shape is provided at the center area of the washing vessel **60.** The reservoir vessel **62** has an opening **62a** at an upper part thereof so that a lowering tip of the dispensing probe **50** is inserted thereinto from the above, and a reserve washing water supplying section **63** is provided at a lower portion of the side surface thereof. The reserve washing water supplying section **63** is connected with the reservoir vessel **62** via a nozzle portion **63a,** and the nozzle portion **63a** is provided with its outlet facing the inward of the reservoir vessel **62.** The nozzle portion **63a** is connected with one end of a tube **63b,** and the other end of the tube **63b** is connected to a tank **61c** via an electromagnetic valve **63c** and a pump **61e.** The tank **61c** is for housing washing water **L2**. In addition, spout washing water supplying section **61** is provided at an upper part of the washing vessel **60.** The spout washing water supplying section **61** has a nozzle section **61a.** The nozzle section **61a** is provided at the upper part inside the washing vessel **60** and directs its outlets diagonally below, and a plurality of the nozzle sections **61a** (two outlets in the present Embodiment) are provided towards a perpendicular center line **S** of the washing vessel **60.** Each of the nozzle sections **61a** is connected with one end diverged from a tube **61b.** The tube **61b** is formed such that the one and the other end join as one in the midway of the tube. The other end of the tube **61b** is connected to the tank **61c** for housing washing water **L2,** via an electromagnetic valve **61d** and a pump **61e.** The tube **61b,** which connects the tank **61c** for housing the washing water **L2** with the pump **61e,** diverges into the tube **63b** for supplying the washing water **L2** to the reserve washing water supplying section **63,** and into the spout washing water supplying section **61.** Distilled water, degassed water or the like is used as the washing water **L2.** In addition, one end of a tube **62b** is connected to a bottom part of the reservoir vessel **62,** and the other end of the tube **62b** is connected to a disposal tank **62c** via an electromagnetic valve **62d.**

The washing vessel **60** comprises an overflow vessel **64** provided therein. The overflow vessel **64** is disposed in parallel with the reservoir vessel **62** inside the washing vessel **60.** The opening of the overflow vessel **64** is formed in a conical shape such that the opening forms an inclined surface downwards from the opening **62a** of the reservoir vessel **62,** and the opening of the overflow vessel **64** is further formed such that the bottom part thereof penetrates the bottom part of the washing vessel **60**. One end of a tube **64a** is connected to a lower part of the overflow vessel **64.** The other end of the tube **64a** is connected to the disposal tank **62c.**

The dispensing probe washing apparatus **6** opens the electromagnetic valve **61d** and drives the pump **61e,** so that the washing water **L2** housed in the tank **61c** is spouted into the washing vessel **60** from the outlet of the nozzle section **61a** via the tube **61b**. Inaddition, the dispensingprobe washing apparatus **6** opens the electromagnetic valve **63c** and drives the pump **61e,** so that the washing water **L2** housed in the tank **61c** is supplied into the reservoir vessel **62** from the outlet of the nozzle section **63a** via the tube **63b,** and the washing water **L2** is also reserved in the reservoir vessel **62.** The washing water **L2** spouted from the nozzle section **61a** into the inside the washing vessel **60** as well as the washing water **L2** supplied from the nozzle section **63a** into the reservoir vessel **62** and overflow from the opening **62a** of the reservoir vessel **62,** are allowed to overflow into the overflow vessel **64.** Since the wall surface between the reservoir vessel **62** and the overflow vessel **64** is in such a shape that forms an inclined surface inclining downwards from the reservoir vessel **62** to the overflow vessel **64,** the washing water **L2** is guided from the opening **62a** along the inclined surface into the overflow vessel **64.** The overflow washing water **L2** or the like is discharged from the overflow vessel **64** via the tube **64a** to the disposal tank **62c,** which is located outside the washing vessel **60.** In addition, as the electromagnetic valve **62d** is opened, the washing water **L2** reserved in the reservoir vessel **62** is discharged via the tube **62b** to the disposal tank **62c.**

A washing water controlling section **203** controls an overflow timing of the washing water **L2** reserved in the reservoir vessel **62** to the overflow vessel **64.** The washing water controlling section **203** also controls the supplying amount of the washing water **L2** supplied from the reserve washing water supplying section **63** based on the sample type of the specimen to be washed. The washing water controlling section **203** controls the supply amount of the washing water **L2** to be larger as the sample type becomes a more difficult one to be washed. Therefore, the washing water controlling section **203** controls the amount of the washing water to be larger in the order of the blood plasma (blood serum) samples < whole blood samples < blood cell samples. However, if some extended washing time can be taken, sufficient washing is feasible only by adjusting the lowering speed of the dispensing probe **50** to the washing vessel **60** by the washing control section **200,** without the controlling of adjustment of the washing water amount by the washing water controlling section **203** in accordance with the sample type of specimens to be washed.

The dispensing probe washing apparatus **8** is provided in between the reaction table **4** and the reaction table **3,** and at a midway position of a locus of the horizontal movement of the dispensing probe in the reagent dispensing apparatus **7.** In order to prevent carryover between specimens, the washing of the dispensingprobe is performed by the dispensing probe washing apparatus **8** every time the dispensing of a specimen is performed by the dispensing probe.

Next, the control mechanism **10** will be described. As illustrated in Figure **1****,** the control mechanism **10** comprises a control section **101,** an input section **102,** an analysis section **103,** a storage section **104,** an output section **105** and a transmission and reception section **107.** The respective sections comprised by the control mechanism **10** are electrically connected to the control section **101.** The control section **101** is configured with a CPU and the like, for controlling the processing and operation of the respective sections of the automatic analyzer **1.** The control section **101** performs given input and output controls of information that is input to and output from the respective configuration parts, and performs given information processing on the information. The control section **101** also comprises: a washing control section **200** for controlling the specimen dispensing apparatus **5;** a interface detecting section **201** for detecting an interface of a specimen which is separated into layers; a calculating section **202** for calculating a contamination adhering range on an external wall surface of the dispensing probe **50;** and a washing water controlling section **203** for controlling the dispensing probe washing apparatus **6.** The analysis section **103** is connected to the photometry apparatus **33** via the control section **101,** for analyzing a concentration of components of a specimen or the like based on the amount of light received by the light receiving section **33b,** and outputting the analysis result to the control section **101.** The input section **102** is a part for performing operations of inputting an examination menu or the like to the control section **101.** For example, a keyboard, a mouse or the like is used as the input section **102.** The washing control section **200,** interface detecting section **201** and calculating section **202** may be comprised by the specimen dispensing apparatus **5;** and the washing water controlling section **203** may be comprised by the dispensing probe washing apparatus **6.**

The storage section **104** is configured with a hard disk for magnetically storing information, and a memory for loading and electrically storing various programs for processing from the hard disk when the automatic analyzer **1** performs the processing. The storage section **104** stores various types of information including analysis results or the like of a specimen. The storage section **104** may also comprise an auxiliary storage unit capable of reading information stored in a storage medium, such as a CD-ROM, a DVD-ROM and a PC card. The storage section **104** also stores information required for the analysis of all the analyzable analysis menu, such as analysis conditions including a sample type of specimens, an analysis menu, and a specimen dispensing amount and the like, as well as specimen container information including a specimen container shape corresponding to a specimen container type.

The output section **105** is configured with a printer, a speaker or the like, and outputs various types of information associated with analysis, under the control of the control section **101.** The output section **105** comprises a display section **106** configured wi th a display or the like. The display section **106** is for displaying analysis content, a warning or the like, and a display panel or the like is used for the display section **106.** The input section **102** and the display section **106** may also be achieved with a touch panel. The transmission and reception section **107** has a function as an interface for transmitting and receiving information in accordance with a given format via a communication network (not shown). Analysis information such as the sample type of specimens, an analysis menu and the dispensing amount of specimens may be collectively managed by a host computer (not shown) instead of the storage section **104** described above. In such a case, the transmission and reception section **107** transmits and receives such information to extract analysis information.

In the automatic analyzer **1** with such a configuration, the specimen dispensing apparatus **5** dispenses a specimen from a specimen container **22** to a reaction container **32.** In addition, the reagent dispensing apparatus **7** dispenses a reagent from a reagent container **42** to the reaction container **32.** While the reaction container **32,** into which the specimen and reagent have been dispensed, is conveyed by the reaction table **3** along the circumferential direction, the specimen and the reagent are stirred and they react with each other, passing through the light source **33a** and the light receiving section **33b.** At this stage, analysis light is output from the light source **33a** and the analysis light passes through a reaction liquid inside the reaction container **32,** and the analysis light is measured by the light receiving section **33b** to analyze component concentration or the like. The reaction liquid after the measurement is discharged by the reaction container washing apparatus **34** from the reaction container **32** finished with the analysis, and the reaction container **32** is washed by the reaction container washing apparatus **34.** Subsequently, the reaction container **32** is used again for analysis of a specimen. The dispensing probe **50** after the dispensing of a specimen is washed by the dispensing probe washing apparatus **6** every time dispensing is performed in order to prevent the carryover between specimens or to prevent clogging or contamination adhesion of the dispensing probe due to specimen components.

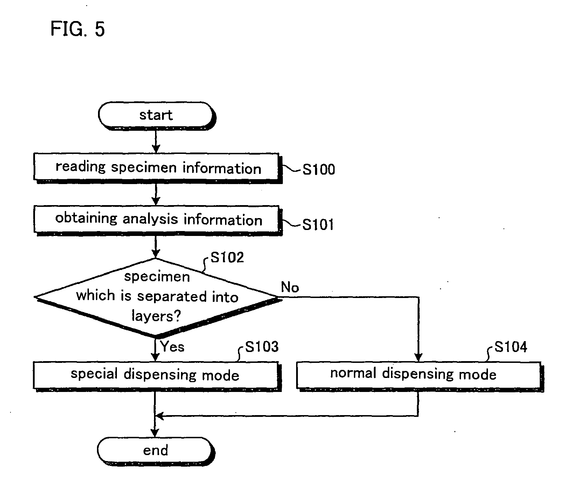

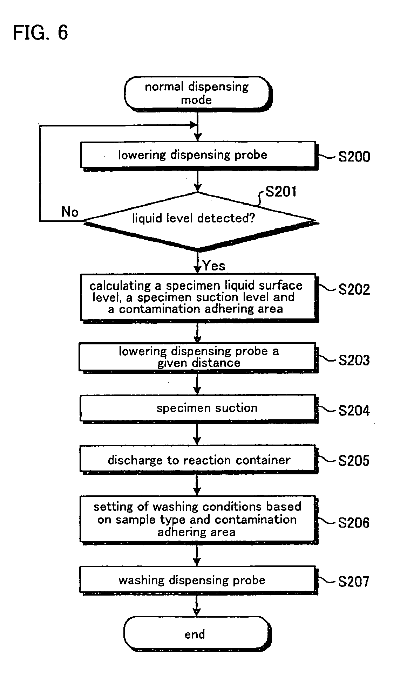

Next, dispensing operations in dispensing different sample types as specimens by a dispensing probe **50** will be described. Figure **5** is a flowchart illustrating dispensing operations for dispensing different sample types as specimens. Figure **6** is a flowchart illustrating dispensing operations of a normal dispensing mode in Figure **5****.**

As illustrated in Figure **5****,** the reading section **23** first reads a specimen ID of a specimen to be dispensed, and a specimen container ID from an identification label of a specimen container **22** (Step S100) . Analysis information such as the type of the specimen, a specimen suction position, and an analysis menu, as well as specimen container information including the shape of a specimen container, is obtained from the storage section **104** based on the read specimen ID and specimen container ID (Step S101). The control section **101** switches dispensing modes based on information on the type of the specimen, i.e., information as to whether the specimen is separated into layers (Step S102). If the specimen is the one which is separated into layers of blood plasma and blood cells (Step S102: Yes), then the dispensing is performed in a special dispensing mode (Step S103). If the specimen does not have layer separation, such as other blood plasmas or whole blood specimens (Step S102: No), then a control section **15** performs a normal dispensing mode and ends the present controlling (Step S104).

As illustrated in Figure **6****,** in the normal dispensing mode (Step S104), under the control by the washing control section **200,** the dispensing probe **50** is lowered into the specimen container **22** (Step S200). The dispensing probe is lowered until the liquid level detecting section **51** detects a liquid level (Step S201: No). After the detection of a liquid level (Step S201: Yes), the lowering of the dispensing probe **50** is stopped. Subsequently, the calculating section **202** calculates a specimen liquid surface level, a specimen suction level and a contamination adhering range, based on the sample type, specimen suction position, specimen container information and liquid level position (Step S202) . Since the specimen suction position and the specimen liquid surface level are different depending on the sample type and the specimen, the specimen liquid surface level, specimen suction level and contamination adhering range are calculated for each specimen. The specimen liquid surface level is a specimen liquid surface level in a specimen container **22,** which is calculated from the specimen container information and liquid level position. The specimen suction level is a level at which a specimen is sucked out within the specimen, which is calculated from a specimen suction position and a specimen liquid surface level set for each sample. If it is set to perform the suction from the lower most part depending on the sample type, then the specimen suction level is calculated from the specimen container information. The contamination adhering range is a specimen adhering range to the external wall of the dispensing probe **50,** which is calculated from the specimen liquid surface level and the specimen suction level.

The dispensing probe **50** is lowered a given distance from the liquid level position to the specimen suction level (Step S203). Subsequently, the specimen is sucked out (Step S204), and the sucked specimen is discharged into the reaction container **32** (Step S205) . Subsequently, based on sample type information of the specimen obtained at Step S101 and the contamination adhering area calculated at Step S202, the washing control section **200** and the washing water controlling section **203** set washing conditions, such as a washing range, a lowering speed and/or washing water amount, of the dispensing probe **50** in the dispensing probe washing apparatus **6** (Step S206). After the dispensing probe **50** is conveyed to the dispensing probe washing apparatus **6,** the dispensing probe **50** is washed under the washing conditions set at Step S206 (Step S207). The washing water controlling section **203** controls the supply amount of the washing water **L2** from the spout washing water supplying section **61** and the reserve washing water supplying section **63** in the dispensing probe washing apparatus **6,** as well as the overflow amount and overflow timing from the reservoir vessel **62** to the overflow vessel **64.** For each sample type of the specimens, the washing control section **200** and the washing water controlling section **203** control the washing conditions to perform such washing.

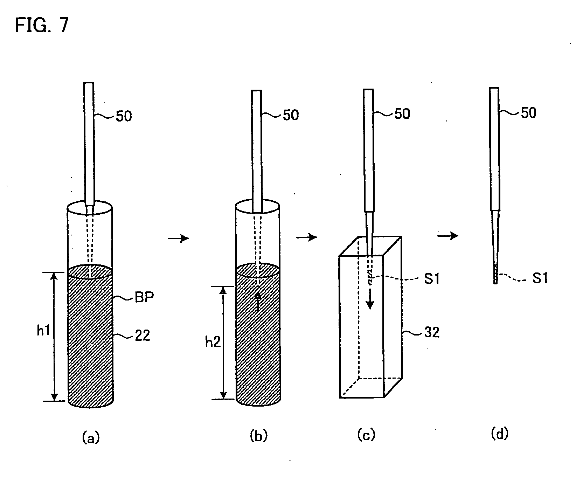

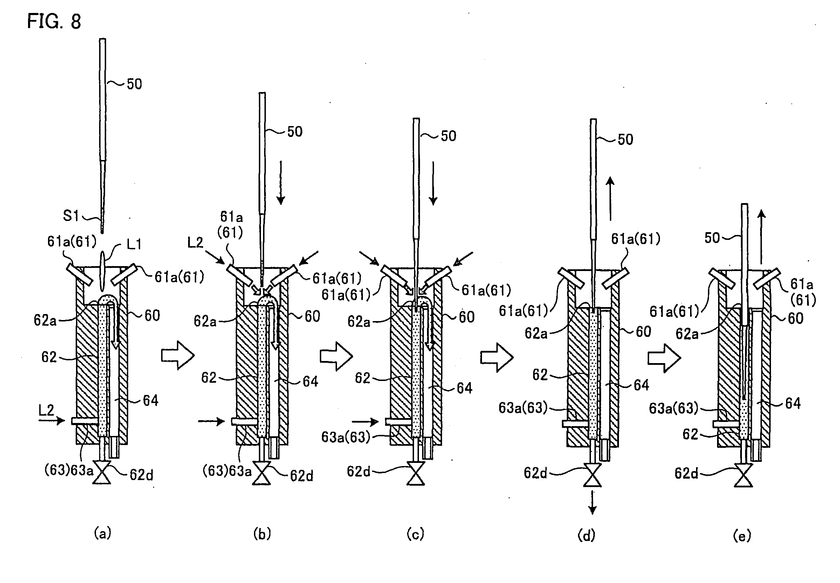

Next, the dispensing and washing of specimens for each sample type will be described for individual cases. Figure **7** is a dispensing operation diagram of a case where a blood plasma sample is dispensed. Figure **8** is a washing operation diagram after a bloodplasma sample **BP** is dispensed. As illustrated in Figure **7(a)****,** when the dispensing probe **50** is lowered into a specimen container **22** and the liquid level detecting section **51** detects a liquid level, the lowering of the dispensing probe **50** is paused. Also, based on a detected blood plasma liquid level position, a set blood plasma suction position, and specimen container information, the calculating section **202** calculates a blood plasma liquid surface level **h₁** and a blood plasma suction level **h₂**. As illustrated in Figure **7(b)****,** under the control of the washing control section **200,** the dispensing probe **50** is lowered a given distance from the blood plasma liquid surface level to the blood plasma suction level **h₂** and the blood plasma **BP** is sucked out. The sucked blood plasma **BP** is discharged into a reaction container **32** (see Figure **7(c)**), and the blood plasma **BP** is adhered to the external wall surface of the dispensing probe **50** by a range **S₁**, which corresponds to the length of the dispensing probe **50** inserted in the blood plasma **BP.** The calculating section **202** calculates the area of the contamination adhering range **S₁** based on the blood plasma liquid surface level **h₁** and the blood plasma suction level **h₂** (see Figure **7(d)**).

The blood plasma specimen **BP** is dispensed in the reaction container **32,** and subsequently, the dispensing probe **50** is conveyed to the dispensing probe washing apparatus **6** and the washing of an internal surface of the dispensing probe **50** is first performed, as illustrated in Figure **8(a)****.** The pump driving section **56** is driven to allow the piston **55a** to move and advance, so that the extrusion liquid **L1** is discharged from the dispensing probe **50** together with the blood plasma **BP** remaining inside the dispensing probe **50.** At this stage, the reservoir vessel **62** is controlled by the washing water controlling section **203** such that at least the washing water **L2** is supplied to the reservoir vessel **62** from the reserve washing water supplying section **63** to be allowed to overflow along the inclined surface formed between the reservoir vessel **62** and the overflow vessel **64,** from the opening **62a** of the reservoir vessel **62,** into the overflow vessel **64,** before the extrusion liquid **L1** falls into and reach the reservoir vessel **62** by the advancement of the piston **55a.** During the falling of the extrusion liquid **L1** into the reservoir vessel **62,** it is controlled such that the overflow goes from the reservoir vessel **62** into the overflow vessel **64.** By this overflowing, the discharged extrusion liquid **L1** including the blood plasma specimen **BP** is discharged to the overflow vessel **64** together with the overflow washing water **L2,** and the degree of cleanliness of the washing water **L2** within the reservoir vessel **62** is maintained.

As the discharging of the extrusion liquid **L1** is stopped, the washing of the internal wall surface of the dispensing probe **50** ends, and the washing of the external wall surface of the dispensing probe **50** is performed. In the external wall surface of the dispensing probe **50** after the dispensing of the blood plasma specimen, the blood plasma **BP** is adhered by the contamination adhering range **S₁** due to the lowering into the blood plasma **BP.** Since blood plasma is a sample type of specimen that is easy to wash off, the washing control section **200** sets the lowering speed of the dispensing probe **50** to the washing vessel **60** to be high, and sets the washing range to be the contamination adhering range **S₁** plus some extra. The dispensing probe **50** is allowed to be lowered and advanced, at a high speed, in the flow path created by spouting the washing water **L2** from the nozzle section **61a** of the spout washing water supplying section **61,** at an upper part of the reservoir vessel **62** from which the washing water **L2** is allowed to overflow, and the external wall surface of the dispensing probe **50** is washed (see Figure **8(b)**). In a state where the washing water **L2** is supplied from the nozzle section **63a** of the reserve washing water supplying section **63** and the washing water **L2** is allowed to overflow from the opening **62a** of the reservoir vessel **62** into the overflow vessel **64,** the dispensing probe **50** is allowed to be lowered and advanced, at a high speed, to be inserted into the opening of the washing vessel **60.** The washing water **L2** injected out of the nozzle section **61a** hits the external wall surface of the dispensing probe **50** along the longitudinal direction (advancing direction) of the dispensing probe **50,** and the specimen adhered to the external wall surface of the dispensing probe **50** is removed, thus washing the external wall surface of the dispensing probe **50.** Although the removed specimen falls into the reservoir vessel **62** together with the washing water **L2,** the reservoir vessel **62** overflows the washing water **L2** from the opening **62a.** Thus, the washing water **L2** injected from the nozzle section **61a** is discharged to the overflow vessel **64** together with the overflow washing water **L2** and the degree of cleanliness of the washing water **L2** within the reservoir vessel **62** is maintained.

When the dispensing probe **50** is lowered at a high speed, the washing water controlling section **203** performs control such that the washing water **L2** is spouted from the nozzle section **61a** of the spout washing water supplying section **61,** from the time at which the tip section of the dispensing probe is expected to advance into the washing water **L2** being spouted until the time at which an upper part of the external wall surface above the contamination adhering range **S₁** of the dispensing probe is expected to advance into the washing water **L2** being spouted. Further, during the time which the washing water **L2** from the nozzle section **61a** drops into the reservoir vessel **62,** the washing water controlling section **203** performs control such that the washing water **L2** is supplied from the reserve washing water supplying section **63** and the washing water **L2** is allowed to overflow to the overflow vessel **64.**

After the washing with the spouting of the washing water **L2** from the nozzle section **61a,** the contamination adhering range **S₁** of the dispensing probe **50** is dipped in the washing water **L2** reserved in the reservoir vessel **62** to further wash the external wall surface (see Figure **8(c)**). The washing water controlling section **203** performs control such that the washing water **L2** is supplied from the reserve washing water supplying section **63** and the washing water **L2** overflows to the overflow vessel **64** even while the contamination adhering range **S₁** of the dispensing probe **50** is lowered and dipped in the washing water **L2** reserved in the reservoir vessel **62.** As a result, the degree of the cleanliness of the washing water **L2** within the reservoir vessel **62** is maintained, and the washing capability of the dispensing probe **50** by the dip-washing is improved.

After the dispensing probe **50** is lowered and dipped in the washing water **L2** reserved in the reservoir vessel **62,** the washing water controlling section **203** stops the supply of the washing water **L2** from the reserve washing water supplying section **63** to the reservoir vessel **62,** and allows the dispensing probe **50** to ascend and to be pulled out of the washing water **L2** reserved in the reservoir vessel **62** (see Figure **8(d)**). During the pulling up of the dispensing probe **50,** the overflow from the reservoir vessel **62** is stopped, and the pulling speed is controlled, so that the amount of the washing water **L2** adhered to the dispensing probe **50** can be reduced. After the pulling up of the dispensing probe **50** from the washing water **L2** in the reservoir vessel **62,** the electromagnetic valve **62d** is operated to be opened, so that the washing water **L2** in the reservoir vessel **62** is discharged into the disposal tank **62c,** and the washing ends (see Figure **8(e)**).

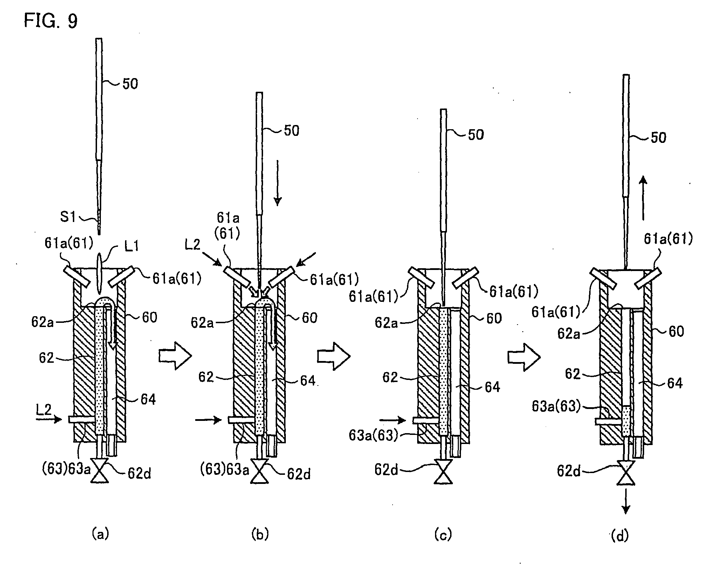

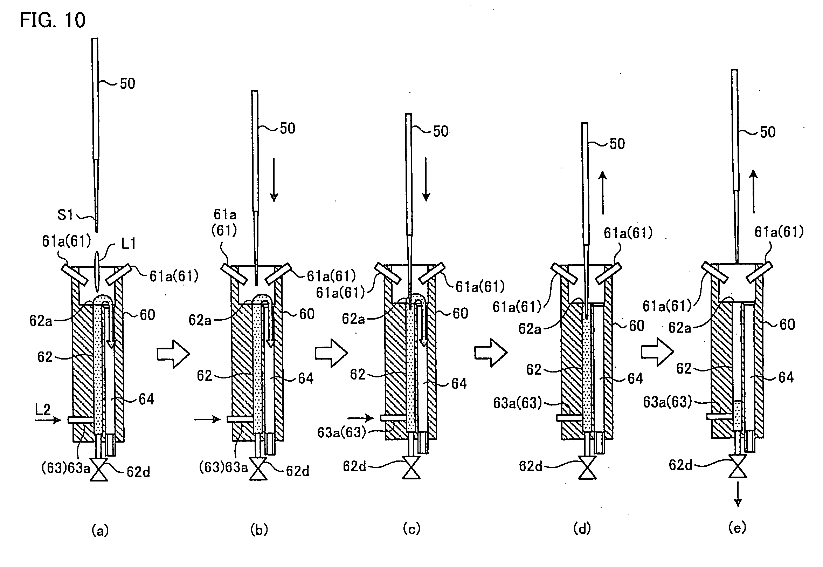

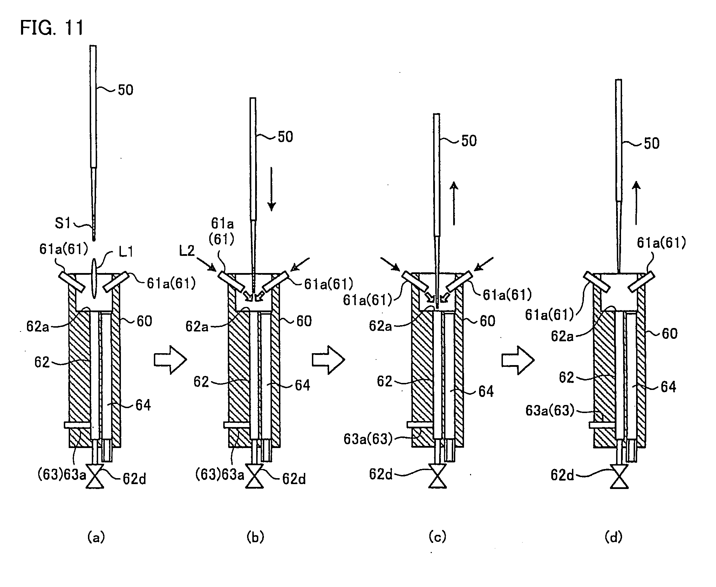

When the type of sample that is easy to wash, such as blood plasma **BP** (blood serum **BS**), iswashedoff, the washing may be performed as illustrated in Figures **9** to **11****,** instead of the washing method described above. By using both the spout-washing of the washing water **L2** by the spout washing water supplying section **61** and the dip-washing like the above-mentioned method, the washing effect can be increased and carryover can be prevented. However, a high level analysis accuracy may not be required depending on specimen to be analyzed or an analysis menu. In such a case, the washing time and the amount of washing water to be used can be reduced by applying the washing method illustrated in Figures **9** to **11****.** Figure **9** illustrates a washing method that is different from the above-mentioned method in that the dispensing probe **50** is not dipped in the washing water **L2** reserved in the reservoir vessel **62** to be washed (see Figure **9(c)**). Figure **10** illustrates a washing method in which the dispensing probe **50** is dipped in the washing water **L2** reserved in the reservoir vessel **62** and is washed without using the spouting of the washing water **L2** from the nozzle section **61a** of the spout washing water supplying section **61** (see Figure **10(d)**). Figure **11** illustrates a method for washing the dispensing probe **50** only with the spouting of the washing water **L2** from the nozzle section **61a** of the spout washing water supplying section **61,** without reserving the washing water **L2** in the reservoir vessel **62.** In this method, it is not necessary to perform the internal wall washing by the spouting of the extrusion liquid **L1** prior to the external wall washing, which may be performed together with the washing by the spouting of the washing water **L2** from the nozzle section **61a,** or after the washing by the spouting of the washing water **L2** from the nozzle section **61a** (see Figure **11(c)**). In any of the washing methods illustrated in Figures **9** to **11****,** the washing control section **200** controls the lowering speed of the dispensingprobe **50** down to the washing vessel **60** to be greater, thereby shortening the washing time and reducing the amount of the washing water to be used. In addition, when the type of sample that is easy to wash, such as blood plasma **BP** (blood serum), is washed off, the washing water controlling section **203** may control the supply amount of the washing water **L2** to be smaller from the nozzle section **61a** of the spout washing water supplying section **61** and/or the nozzle section **63a** of the reserve washing water supplying section **63.**

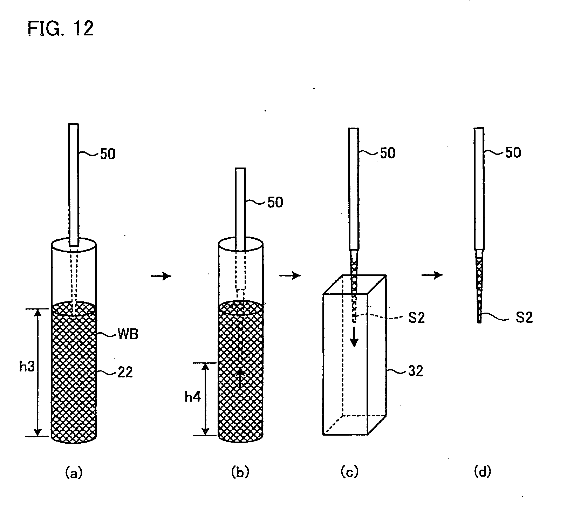

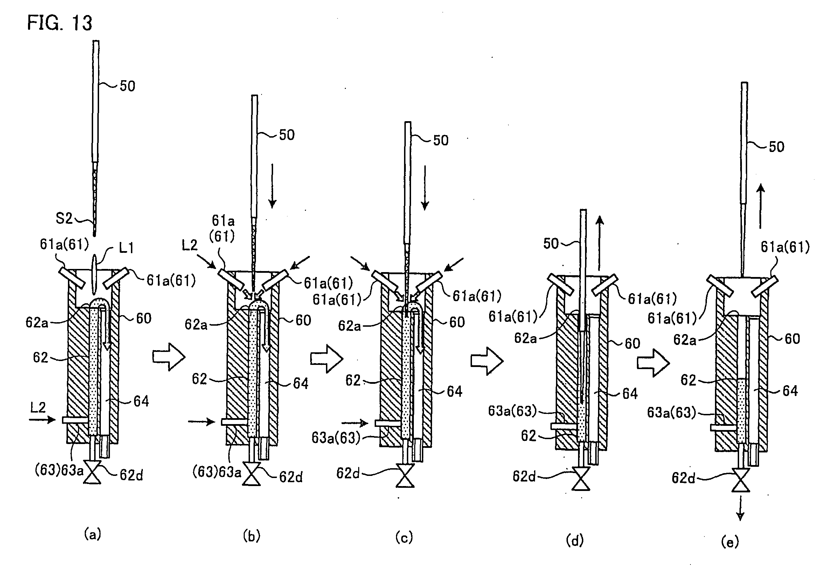

Next, the dispensing and washing in the case where the specimen is a whole blood specimen **WB** will be individually described. Figure **12** is a diagram of a dispensing operation for dispensing a whole blood specimen **WB.** Figure **13** is a diagram of a washing operation after a whole blood specimen **WB** is dispensed. As illustrated in Figure **12(a)****,** when the dispensing probe **50** is lowered into the specimen container **22** and the liquid level detecting section **51** detects a liquid level, the lowering of the dispensing probe **50** is paused. Based on the detected whole blood liquid level position, a set whole blood specimen suction position, and specimen container information, the calculating section **202** calculates a whole blood liquid surface level **h₃** and a whole blood suction level **h₄**. As illustrated in Figure **12(b)**, under the control by the washing control section **200,** the dispensing probe **50** is lowered a given distance from the whole blood liquid level position to the whole blood suction level **h₄,** and the whole blood specimen **WB** is sucked out. The sucked out whole blood specimen **WB** is discharged to a reaction container **32** (see Figure **12(c)**). The whole blood **WB** corresponding to the length of the dispensing probe **50** inserted into the whole blood specimen is adhered to the external wall surface of the dispensing probe **50** after the discharge of the whole blood, and the calculating section **202** calculates an area of a contamination adhering range **S₂** based on the whole blood liquid surface level **h₃** and the whole blood suction level **h4** (see Figure **12(d)**).

After the whole blood specimen **WB** is dispensed in the reaction container **32,** the dispensingprobe **50** is conveyed to the dispensing probe washing apparatus **6** as illustrated in Figure **13(a)****,** and washing for the internal wall surface of the dispensing probe **50** is first performed. By the driving of the pump driving section **56** and the moving of the piston **55a** is advancing, the extrusion liquid **L1** is made to be discharged from the dispensing probe **50** together with the whole blood **WB** remaining inside the dispensing probe **50.** At this stage, the reservoir vessel **62** is controlled by the washing water controlling section **203** such that at least the washing water **L2** is supplied from the reserve washing water supplying section **63** before the extrusion liquid **L1** falls into and reaches the reservoir vessel **62** by the advancement of the piston **55a,** to be allowed to overflow along the inclined surface formed between the reservoir vessel **62** and the overflow vessel **64,** from the opening **62a** of the reservoir vessel **62** to the overflow vessel **64.** When the extrusion liquid **L1** is falling into the reservoir vessel **62,** it is controlled to overflow from the reservoir vessel **62** to the overflow vessel **64.** By this overflow, the discharged extrusion liquid **L1** including the whole blood specimen is discharged to the overflow vessel **64** together with the overflow washing water **L2,** thus maintaining the degree of cleanliness of the washing water **L2** in the reservoir vessel **62.**

With the stop of the discharging of the extrusion liquid **L1,** the washing of the internal wall surface of the dispensing probe **50** ends, and the washing of the external wall surface of the dispensing probe **50** is then performed. The whole blood **WB** of the area equal to the contamination adhering range **S₂** is adhered to the external wall surface of the dispensing probe **50** after the dispensing of the whole blood specimen, due to the lowering into the whole blood specimen **WB.** Since the whole blood specimen **WB** is more difficult to wash compared to the blood plasma **BP** (blood serum), the washing control section **200** sets the lowering speed of the dispensing probe **50** into the washing vessel **60** to be a medium speed, and sets the washing range to be a contamination adhering range **S₂** plus some extra. The dispensing probe **50** is allowed to be lowered and advanced, at a medium speed, in the flow path created by spouting the washing water **L2** from the nozzle section **61a** of the spout washing water supplying section **61,** at an upper part of the reservoir vessel **62** from which the washing water **L2** is allowed to overflow, and the whole blood **WB** adhered to the external wall surface of the dispensing probe **50** is washed (see Figure **13(b)**). In a state where the washing water **L2** is supplied from the nozzle section **63a** of the reserve washing water supplying section **63** and the washing water **L2** is allowed to overflow from the opening **62a** of the reservoir vessel **62** into the overflow vessel **64,** the dispensing probe **50** is allowed to be lowered and advanced, at a medium speed, to be inserted into the opening **60a** of the washing vessel **60.** The washing water **L2** injected out of the nozzle section **61a** hits the external wall surface of the dispensing probe **50** along the longitudinal direction (advancing direction) of the dispensing probe **50,** and the whole blood specimen **WB** adhered to the external wall surface of the dispensing probe **50** is removed, thus washing the external wall surface of the dispensing probe **50.** Although the removed specimen falls into the reservoir vessel **62** together with the washing water **L2,** the reservoir vessel **62** is overflows the washing water **L2** from the opening **62a**. Thus, the washing water **L2** injected from the nozzle section **61a** is spouted to the overflow vessel **64** together with the overflow washing water **L2** and the degree of cleanliness of the washing water **L2** within the reservoir vessel **62** is maintained.

When the dispensing probe **50** is lowered at a speed of a medium degree, the washing water controlling section **203** performs control such that the washing water **L2** is spouted from the nozzle section **61a** of the spout washing water supplying section **61,** from the time at which the tip section of the dispensingprobe is expected to advance into the washing water **L2** being spouted until the time at which an upper part of the external wall surface above the contamination adhering range **S₂** of the dispensing probe **50** is expected to advance into the washing water **L2** being spouted and a certain period of time elapses. Further, during the time which the washing water **L2** from the nozzle section **61a** drops into the reservoir vessel **62,** the washing water controlling section **203** performs control such that the washing water **L2** is supplied from the reserve washing water supplying section **63** and the washing water **L2** overflows to the overflow vessel **64.** As a result, the degree of the cleanliness of the washing water **L2** within the reservoir vessel **62** is maintained, and the washing capability of the dispensing probe **50** by the dip-washing is improved.

During the washing by the spouting of the washing water **L2** from the nozzle section **61a** of the spout washing water supplying section **61,** under the control of the washing control section **200,** the dispensing probe **50** is lowered at a medium speed and the dispensing probe **50** is inserted and dipped in the reservoir vessel **62,** from which the washing water **L2** is allowed to overflow to the overflow vessel **64** by the supply of the washing water **L2** from the reserve washing water supplying section **63.** Even after the washing with the spouting of the washing water **L2** from the nozzle section **61a** of the spout washing water supplying section **61** ends, the washing control section **200** allows the dispensing probe **50** to be lowered at a medium speed until the contamination adhering range **S₂** of the external wall surface of the dispensing probe **50** is completely inserted and dipped in the washing water **L2** in the reservoir vessel **62** (contamination adhering range **S₂** plus some extra). The washing water controlling section **203** performs control such that the washing water **L2** is supplied from the reserve washing water supplying section **63** and the washing water **L2** overflows to the overflow vessel **64** even while the contamination adhering range **S₂** of the dispensing probe **50** is being lowered and dipped in the washing water **L2** reserved in the reservoir vessel **62.**

After the contamination adhering range **S₂** of the dispensing probe **50** is completely dipped in the washing water **L2** reserved in the reservoir vessel **62,** the washing water controlling section **203** stops the supply of the washing water **L2** from the reserve washing water supplying section **63** to the reservoir vessel **62,** and the washing control section **200** allows the dispensing probe **50** to ascend and to be pulled out of the washing water **L2** reserved in the reservoir vessel **62** (see Figure **13(d)**). During the pulling up of the dispensing probe **50,** the overflow from the reservoir vessel **62** is stopped, and the pulling speed is controlled, so that the amount of the washing water **L2** adhered to the dispensing probe **50** can be reduced. After the pulling up of the dispensing probe **50** from the washing water **L2** in the reservoir vessel **62,** the electromagnetic valve **62d** is operated to be opened, so that the washing water **L2** in the reservoir vessel **62** is discharged into the disposal tank **62c,** and the washing ends (see Figure **13(e)**).

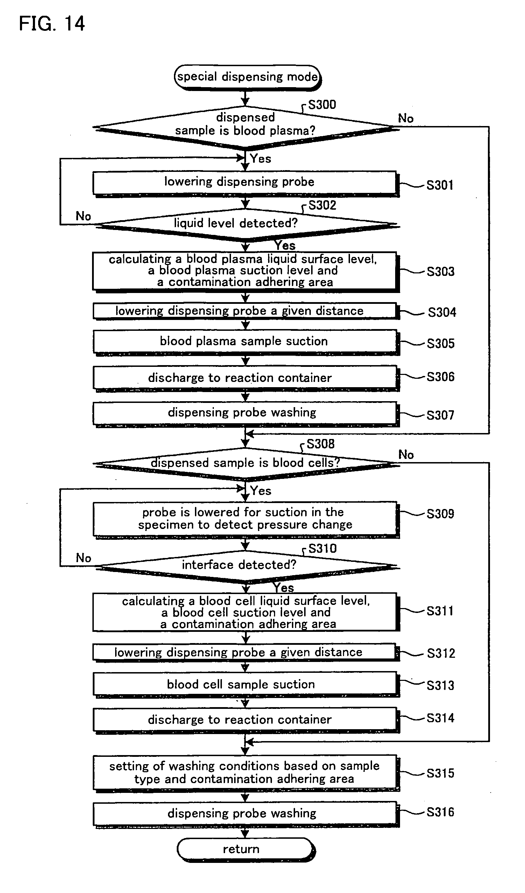

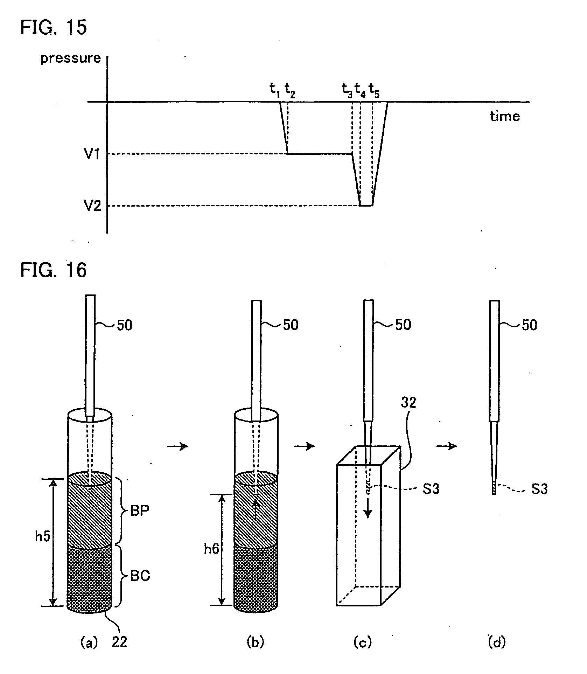

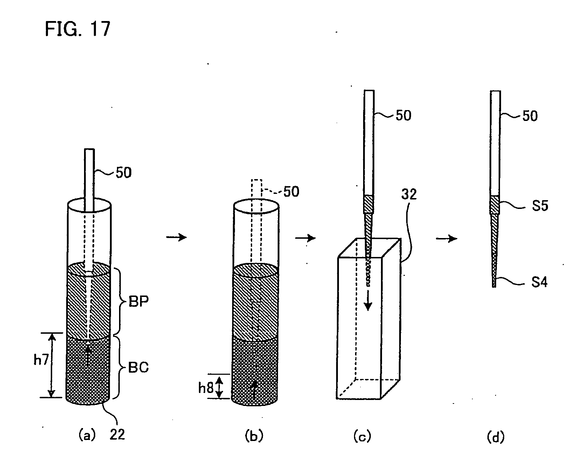

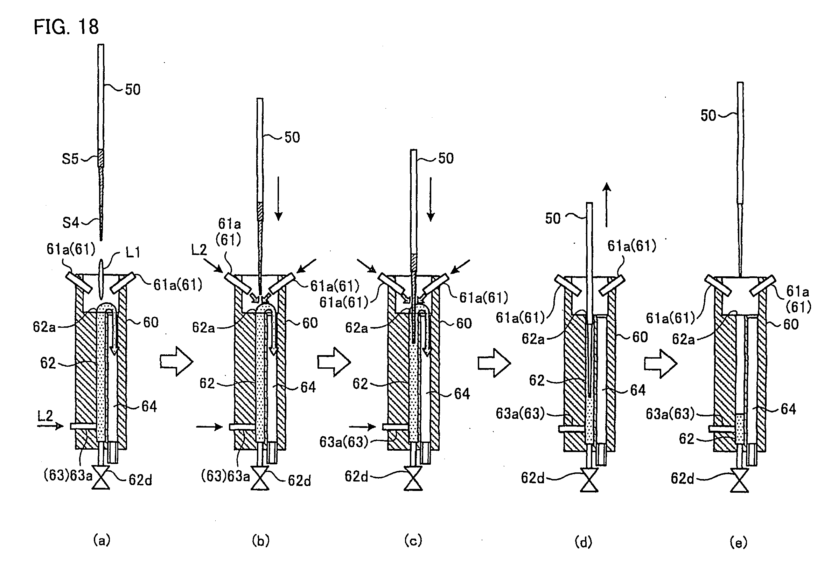

Next, ina special dispensingmode, the specimen which is the one separated into layers of blood plasma and blood cells, will be described. Figure **14** is a flowchart illustrating a dispensing operation of the special dispensing mode in Figure **5****.** Figure **15** is a graph of pressure change when the dispensing probe **50** is lowered into and sucks out a specimen, which is separated into layers of blood plasma and blood cells. Figure **16** is a diagram of a dispensing operation for dispensing blood plasma from a sample which is separated into layers of blood plasma and blood cells. Figure **17** is a diagram of a dispensing operation for dispensing blood cells from a sample which is separated into layers of blood plasma and blood cells. Figure **18** is a diagram of a washing operation after dispensation of blood cells from a sample which is separated into layers of blood plasma and blood cells.

As illustrated in Figure **14****,** in the special dispensing mode (Step S103), it is first confirmed whether the sample to be dispensed is blood plasma or not (Step S300). Normally, the dispensing is performed from each of blood plasma in the upper layer and blood cells in the lower layer of a sample in which such blood plasma and blood cells are separated from one another in layers. However, since there is also a case where specimen dispensing is performed from either of them for reexamination or the like, the dispensing sample is confirmed. If the dispensing sample is blood plasma (Step S300: Yes), then under the control of the washing control section **200,** the dispensing probe **50** is lowered into the specimen container **22** (Step S301) . If the dispensing sample is not blood plasma (step S300: No), then the process moves to Step S308. The dispensing probe **50** continues to be lowered until the liquid level detecting section **51** detects a liquid level (Step S302: No).If a liquid level is detected (Step s302: Yes), then the lowering of the dispensing probe **50** is stopped. Subsequently, based on a blood plasma suction position, specimen container information and a blood plasma liquid level position, the calculating section **202** calculates a blood plasma liquid surface level, a blood plasma suction level and a contamination adhering range (Step S303). The blood plasma liquid surface level is a blood plasma liquid surface level within the specimen container **22,** which is calculated from the specimen container information and the blood plasma liquid surface level. The blood plasma suction level is a level at which blood plasma is sucked out within the specimen, which is calculated from the blood plasma suction position and blood plasma liquid surface level set with regard to blood plasma samples. The contamination adhering range is a range of specimen adhering to the external wall of the dispensing probe **50,** which is calculated from the specimen liquid surface level and the specimen suction level.

The dispensing probe **50** is lowered a given distance from the blood plasma liquid level position to the blood plasma suction level (Step S304) to suck out the blood plasma sample (Step S305). The sucked blood plasma is discharged to the reaction container **32** (Step S306), and the dispensing probe **50** is conveyed to the dispensing probe washing apparatus **6** (Step S307). The washing control section **200** controls the lowering speed of the dispensing probe **50** into the dispensing probewashingapparatus **6,** tobeahighspeed, and also controls the insertion length of the dispensing probe **50** into the dispensing probe washing apparatus **6,** based on the contamination adhering area calculated by the calculating section **202.** The washing water controlling section **203** controls the supply amount of the washing water from the spout washing water supplying section **61** and the reserve washing water supplying section **63** in the dispensing probe washing apparatus **6** as well as the overflow amount from the reservoir vessel **62** to the overflow vessel **64** and the overflow timing.

After the washing of the dispensing probe **50,** it is confirmed whether the sample to be dispensed is blood cells or not (Step S308) . If the dispensing sample is blood cells (Step S308: Yes), then under the control of the washing control section **200,** the dispensing probe **50** is lowered into and suck out the specimen, to detect the pressure change (Step S309). While the dispensing probe **50** is allowed to be lowered into the specimen, the sample is sucked out using the dispensing pump **55,** and the pressure during the suction is detected by the pressure sensor **52.** Figure **15** is a graph of pressure change when the dispensing probe **50** is lowered into and sucks out a specimen, which is separated into layers of blood plasma and blood cells. When the dispensing probe **50** is lowered to suck out the specimen, the suction pressure changes at the liquid level of the blood plasma (**t1**-**t2**). When dispensing probe **50** sucks out the blood plasma and is lowered (**t2-t3**), the pressure is constant (**V1**). When the dispensing probe **50** is further lowered for suction, the pressure changes around the blood plasma-blood cells interface **(t3-t4**). When the dispensing probe **50** is completely inserted in the blood cell sample layer (blood plasma-blood cells interface), the suctionpressure againbecomes constant (**V2**). Therefore, the lowering and suction of the dispensing probe **50** are stopped after the interface detecting section **201** recognizes the blood plasma-blood cells interface (t5) . In addition, in Figure **15****,** as the dispensing probe **20b** sucks out the specimen and is lowered, the suction pressure changes at the point when the dispensing probe **20b** sucks out the blood plasma sample (**t1**). Therefore, it is also possible to detect a blood plasma liquid level by detecting the subj ect pressure change.

The dispensing probe sucks out the specimen and is lowered until the interface detecting section **201** detects the interface (Step S310: No). After the detection of the interface (Step s310: Yes), the lowering of the dispensing probe **50** is stopped. Subsequently, based on a blood cell suction position, specimen container information and a blood cell liquid surface level (interface position), the calculating section **202** calculates a blood cell liquid surface level, a blood cell suction level and a contamination adhering range of each layer (Step S311). The blood cell liquid surface level is a blood cell liquid surface level within the specimen container **22,** which is calculated from the specimen container information and the blood cell liquid surface level (interface position). The blood cell suction level is a level at which the blood cells are sucked out within the specimen, which is calculated from a blood cell suction position, a blood cell dispensing amount and a blood cell liquid surface level, set with regard to blood cell samples. The contamination adheringportion from the specimen which is separated into layers includes a contamination portion due to the adhesion of blood cells and a contamination portion due to the adhesion of bloodplasma. The contamination adhering range is calculated for each layer. The contamination adhering range for each layer is calculated from the blood plasma liquid surface level, the blood cell liquid surface level and the blood cell suction level, based on the insertion length of the dispensing probe **50** into the specimen which is separated into layers.

The dispensing probe **50** is lowered a given distance from the blood cell liquid surface position to the blood cell suction level (Step S312), the blood cell sample is sucked out (Step S313), and the sucked blood cells are discharged to the reaction container **32** (Step S314). Subsequently, based on the sample type information of the specimen obtained at Step S101 as well as the contamination adhering area of each component calculated at Step S303 and Step S311, the washing control section **200** and the washing water controlling section **203** set the washing range, lowering speed and/or washing water amount of the dispensing probe **50** in the dispensing probe washing apparatus **6** (Step S315). After the dispensing probe **50** is conveyed to the dispensing probe washing apparatus **6,** the dispensing probe **50** is washed under the washing conditions set at Step S315 (Step S316). The washing control section **200** first controls the lowering speed of the dispensing probe **50** into the dispensing probe washing apparatus **6** to be a low speed, to wash the blood cells adhered to the tip portion of the dispensing probe **50.** After the washing of the blood cell portion, the washing control section **200** controls the lowering speed of the dispensing probe **50** into the dispensing probe washing apparatus **6** to be switched to a high speed, to wash the blood plasma adhered to the upper part of the dispensing probe **50.** The washing control section **200** also controls the insertion length of the dispensing probe **50** into the dispensing probe washing apparatus **6,** based on the contamination adhering area calculated by the calculating section **202.** The washing water controlling section **203** controls the supply amount of the washing water from the spout washing water supplying section **61** and the reserve washing water supplying section **63** in the dispensing probe washing apparatus **6** as well as the overflow amount from the reservoir vessel **62** to the overflow vessel **64** and the overflow timing. In addition, when the type of sample that is difficult to wash, such as blood cells, is washed off, the washing water controlling section **203** may control the supply amount of the washing water **L2** to be increased from the nozzle section **61a** of the spout washing water supplying section **61** and/or the nozzle section **63a** of the reserve washing water supplying section **63.**

In the blood plasma dispensing, as illustrated in Figure **16(a)****,** the dispensing probe **50** is lowered into the specimen container **22.** When the liquid level detecting section **51** detects a liquid level, the lowering of the dispensing probe **50** is paused. Based on the detected blood plasma liquid level position, a set blood plasma suction position, and specimen container information, the calculating section **202** calculates a blood plasma liquid surface level **h₅** and a blood plasma suction level **h₆**. As illustrated in Figure **16(b)**, under the control of the washing control section **200,** the dispensing probe **50** is lowered a given distance from the blood plasma liquid level position to the blood plasma suction level **h₆**, and the blood plasma specimen **BP** is sucked out. The sucked blood plasma specimen **BP** is discharged to the reaction container **32** (see Figure **16(c)**). The blood plasma **BP** corresponding to the length of the dispensing probe **50** inserted into the specimen is adhered to the external wall surface of the dispensing probe **50** after the discharge of the bloodplasma, and the calculating section **202** calculates an area of a contamination adhering range **S₃** based on the blood plasma liquid surface level **h₅** and the blood plasma suction level **h₆** (see Figure **16(d)**). The dispensing probe **50** after the dispensing of the blood plasma specimen is washed in the same manner as the dispensing probe **50** after dispensing the blood plasma sample which is not separated into layers; however, the subject washing may be omitted.

In the blood plasma dispensing, as illustrated in Figure **17(a)****,** the dispensing probe **50** is lowered for suction into the specimen container **22** to detect the pressure change. When the interface detecting section **201** detects an interface, the lowering of and sucking out by the dispensing probe **50** is paused. Based on the detected the blood cell liquid level position (interface position), a set blood cell suction position and specimen container information, the calculating section **202** calculates a blood cell liquid surface level **h₇** and a blood cell suction level **h₈.** As illustrated in Figure **17(b)****,** under the control of the washing control section **200,** the dispensing probe **50** is lowered a given distance from the blood cell liquid level position to the blood cell suction level **h₈,** and the blood cell specimen **BC** is sucked out. The sucked blood cell specimen **BC** is discharged to the reaction container **32** (see Figure **16(c)**). The blood plasma **BP** and blood cells **BC** corresponding to the length of the dispensing probe **50** inserted into the specimen are adhered to the external wall surface of the dispensing probe **50** after the discharge of the blood cells, and the calculating section **202** calculates an area of a blood cell contamination adhering range **S₄** and a blood plasma contamination adhering range **S₅** based on the blood plasma liquid surface level **h5** calculated at the blood plasma suction, blood cell liquid surface level **h₇** and blood cell suction level **h₈** (see Figure **17(d)**).

After the blood cell specimen **BC** is dispensed to the reaction container **32,** as illustrated in Figure **18(a)**, the dispensing probe **50** is conveyed to the dispensing probe washing apparatus **6,** and the discharging of the specimen remaining inside the dispensing probe **50** and the washing of the internal wall surface thereof are first performed. By the driving of the pump driving section **56** and the moving of the piston **55a** in an advanced manner, the remaining specimen is discharged from the dispensing probe **50** together with the extrusion liquid **L1.** At this stage, the reservoir vessel **62** is controlled by the washing water controlling section **203** such that at least the washing water **L2** is supplied from the reserve washing water supplying section **63** before the extrusion liquid **L1** falls into and reaches the reservoir vessel **62** by the advancement of the piston **55a,** to be allowed to overflow along the inclined surface formed between the reservoir vessel **62** and the overflow vessel **64,** from the opening **62a** of the reservoir vessel **62** to the overflow vessel **64.** When the extrusion liquid **L1** is falling into the reservoir vessel **62,** it is controlled to overflow from the reservoir vessel **62** to the overflow vessel **64.** By this overflow, the discharged extrusion liquid **L1** together with the remaining specimen is discharged to the overflow vessel **64** together with the overflow washing water **L2,** thus maintaining the degree of cleanliness of the washing water **L2** in the reservoir vessel **62.**

With the stop of the discharging of the extrusion liquid **L1,** the washing of the internal wall surface of the dispensing probe **50** ends, and the washing of the external wall surface of the dispensing probe **50** is then performed. The blood cell contamination part **S₄** and the blood plasma contamination part **S5** are adhered to the external wall surface of the dispensing probe **50,** after the dispensing of the blood cell specimen, in accordance with the insertion length into the specimen which is separated into layers. Since the blood cell specimen is most difficult to wash, the washing control section **200** sets the lowering speed of the blood cell contamination part **S₄** of the dispensing probe **50** into the washing vessel **60,** to be the lowest. The dispensing probe **50** is allowed to be lowered and advance, at a low speed, in the flow path created by spouting of the washing water **L2** from the nozzle section **61a** of the spout washing water supplying section **61,** at an upper part of the reservoir vessel **62** from which the washing water **L2** is allowed to overflow, and the blood cells adhered to the external wall surface of the dispensing probe **50** are washed (see Figure **18(b)**). In a state where the washing water **L2** is supplied from the nozzle section **63a** of the reserve washing water supplying section **63** and the washing water **L2** is allowed to overflow from the opening **62a** of the reservoir vessel **62** into the overflow vessel **64,** the dispensing probe **50** is allowed to be lowered and advance, at a medium speed, to be inserted into the opening **60a** of the washing vessel **60.** The washing water **L2** injected out of the nozzle section **61a** hits the external wall surface of the dispensing probe **50** along the longitudinal direction (advancing direction) of the dispensing probe **50,** and the blood cell specimen adhered to the external wall surface of the dispensing probe **50** is removed, thus washing the external wall surface of the dispensing probe **50.** Although the removed specimen falls into the reservoir vessel **62** together with the washing water **L2,** the reservoir vessel **62** is allowed to overflow the washing water **L2** from the opening **62a.** Thus, the washing water **L2** injected from the nozzle section **61a** is discharged to the overflow vessel **64** together with the overflow washing water **L2** and the degree of cleanliness of the washing water **L2** within the reservoir vessel **62** is maintained.

When the dispensing probe **50** is lowered, the washing water controlling section **203** performs control such that the washing water **L2** is spouted from the nozzle section **61a** of the spout washing water supplying section **61,** from the time at which the tip section of the dispensing probe is expected to advance into the washing water **L2** being spouted until the time at which the upper part of the external wall surface above the blood plasma contamination adhering part **S₂** portion of the dispensing probe **50** is expected to advance into the washing water **L2** being spouted and a certain period of time elapses. Further, during the time which the washing water **L2** from the nozzle section **61a** falls into the reservoir vessel **62,** the washing water controlling section **203** performs control such that the washing water **L2** is supplied from the reserve washing water supplying section **63** and the washing water **L2** overflows to the overflow vessel **64.**

During the washing with the injection of the washing water **L2** from the nozzle section **61a** of the spout washing water supplying section **61,** under the control of the washing control section **200,** while the dispensing probe **50** is lowered at a low speed, the dispensing probe **50** is inserted and dipped in the reservoir vessel **62,** from which the washing water **L2** is overflows to the overflow vessel **64** by the supply of the washing water **L2** from the reserve washing water supplying section **63** (see Figure **18(c)**). After the blood cell contamination adhering range **S₄** on the external wall surface of the dispensing probe **50** is completely inserted and dipped in the washing water **L2** within the reservoir vessel **62** (blood cell contamination adhering range **S₄** plus some extra), the washing control section **200** controls the lowering speed of the dispensing probe **50** to be switched to a high speed, and stops the lowering after the blood plasma contamination adhering range **S₅** is completely inserted and dipped in the washing water **L2** in the reservoir vessel **62.** The washing water controlling section **203** performs control such that the washing water **L2** is supplied from the reserve washing water supplying section **63** and the washing water **L2** overflows to the overflowvessel **64** until the bloodplasma contamination adhering range **S₅** portion of the dispensing probe **50** is completely lowered and dipped in the washing water **L2** reserved in the reservoir vessel **62.**

After the blood plasma contamination adhering range **S₅** of the dispensing probe **50** is completely dipped in the washing water **L2** in the reservoir vessel **62,** the washing water controlling section **203** stops supplying the washing water **L2** from the reserve washing water supplying section **63** to the reservoir vessel **62,** and the washing control section **200** allows the dispensing probe **50** to ascend and to be pulled out of the washing water **L2** reserved in the reservoir vessel **62** (see Figure **18(d)****).** During the pulling up of the dispensing probe **50**, the overflow from the reservoir vessel **62** is stopped, and the pulling speed is controlled, so that the amount of the washing water **L2** adhered to the dispensing probe **50** can be reduced. After the pulling up of the dispensing probe **50** from the washing water **L2** in the reservoir vessel **62,** the electromagnetic valve **62d** is operated to be opened, so that the washing water **L2** in the reservoir vessel **62** is discharged into the disposal tank **62c,** and the washing ends (see Figure **18(e)**). In the Embodiments of the present invention, the lowering speed and insertion length of the dispensing probe **50** to the dispensing probe washing apparatus **6** can be controlled for washing in accordance with adhered contamination, specifically, the type of sample to be sucked out and the contamination adhering area, making it possible to reduce the washing time and the amount of the washing water to be used.

Further, in the Embodiments of the present invention, while the lowering speeds of the dispensing probe **50** to the dispensing probe washing apparatus **6** are controlled to be switched in accordance with the type of sample, the lowering speeds may also be controlled in more details in accordance with theviscosityof the samples. For example, it is confirmed that the blood of diabetics has higher viscosity than that of healthy people and such blood is more difficult to wash off. Accordingly, if samples are from diabetics, the lowering speed of the dispensing probe **50** to the dispensing probe washing apparatus **6** can be controlled to be slower than the case with healthy people to perform the washing. As a result, washing defects can be prevented from occurring.

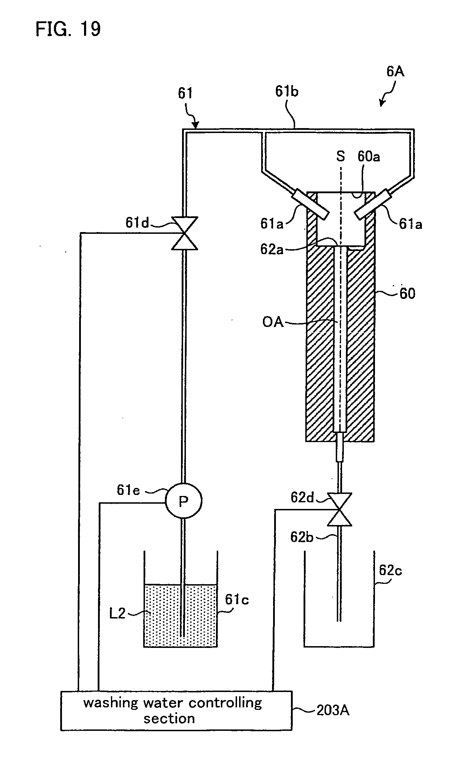

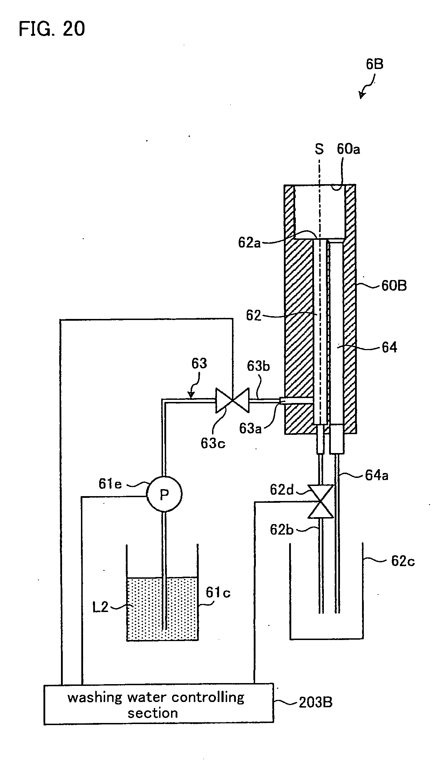

It is preferable for the dispensing probe washing apparatus used for the analyzer **1** according to the present invention to be the dispensing probe washing apparatus **6,** which has a structure capable of allowing overflow from the reservoir vessel **62** to the overflow vessel **64** and capable of spout-washing by the spout washing water supplying section **61;** however, when a high level analysis accuracy is not required depending on specimens to be analyzed or an analysis menu, dispensing probe washing apparatuses **6A** and **6B** as illustrated in Figures **19** and **20** can also be used. The dispensing probe washing apparatus **6A** illustrated in Figure **19** comprises only the spout washing water supplying section **61,** and performs spout-washing on the dispensing probe **50.** The dispensing probe washing apparatus **6B** illustrated in Figure **20** has a structure capable of allowing overflow from the reservoir vessel **62** to the overflow vessel **64,** and dip-washes the dispensing probe **50** while performing overflow. In a case where the washing is performed also by the dispensing probe washing apparatuses **6A** and **6B** as illustrated in Figures **19** and **20****,** the washing control section **200** and the washing water controlling section **203** perform washing while controlling the lowering speed of the dispensing probe **50** to the dispensing probe washing apparatuses **6A** and **6B,** the washing range and/or the amount of the washing water, in accordance with dispensed samples, thereby reducing the washing time and the amount of washing water to be used.

Further, as a variation example of the Embodiments of the present invention, a dispensing apparatus comprising a liquid level estimating section for estimating a liquid level and/or interface of a specimen to be dispensed, is illustrated. In the analyzer according to the variation example, the storage section **104** stores a maximum housed specimen amount for each specimen container type, in addition to analysis conditions, such as the sample type of specimens, and specimen container shapes corresponding to specimen container types. In the variation example, a specimen container ID is read by the reading section **23,** and based on the read specimen container ID, the shape of the specimen container and the maximum specimen amount housed in the specimen container are extracted. The liquid level estimating section estimates a liquid level and/or an interface based on the extracted specimen container shape and the maximum housed specimen amount. When dispensation is performed with one specimen for a plurality ofdifferent analyses in an analysis menu, the liquid level and/or the interface are estimated in consideration of the dispensing amount thereof. Based on the estimated liquid level and/or interface, the sample type of the specimen, and the specimen suction position, the calculating section **203** calculates a contamination adhering range on the external wall surface of the dispensing probe **50.** Although the accuracy of the liquid level and/or interface position estimated by the liquid level estimating section is less than the liquid level detected by the liquid level detecting section, the contamination adhering range can be readily calculated for different specimen container types.

### INDUSTRIAL APPLICABILITY

As described above, the analyzer and the method for washing a dispensing probe according to the present invention are useful for an analyzer capable of analyzing different specimen types by itself, and in particular, they are suitable for a case where the total washing time is shortened to perform analysis in an effective manner.

### DESCRIPTION OF THE REFERENCE NUMERALS

- **1**: analyzer
- **2**: specimen table
- **3**: reaction table
- **4**: reagent table
- **5**: specimen dispensing apparatus
- **6, 6A, 6B, 8**: dispensing probe washing apparatus
- **7**: reagent dispensing apparatus
- **9**: measurement mechanism
- **10**: control mechanism
- **21, 31, 41**: housing section
- **22**: specimen container
- **22a, 42a**: opening
- **23, 43**: reading section
- **32**: reaction container
- **33**: photometry apparatus
- **33a**: light source
- **33b**: light receiving section
- **34**: reaction container washing apparatus
- **42**: reagent container
- **50**: dispensing probe
- **51**: liquid level detecting section
- **52**: pressure sensor
- **53**: probe driving section
- **54**: tube
- **55**: dispensing pump
- **56**: pump driving section
- **57**: tank
- **58**: electromagnetic valve
- **59**: washing water pump
- **60**: washing vessel
- **60a**: opening
- **61**: spout washing water supplying section
- **61a**: nozzle section
- **61b, 62b, 63b, 64a**: tube
- **61c**: tank
- **61d, 62d, 63c**: electromagnetic valve
- **61e**: pump
- **62**: reservoir vessel
- **62a**: opening
- **62c**: disposal tank
- **63**: reserve washing water supplying section
- **63a**: nozzle section
- **64**: overflow vessel
- **101**: controlling section
- **102**: input section
- **103**: analysis section
- **104**: storage section
- **105**: output section
- **106**: display section
- **107**: transmission and reception section
- **200**: washing control section
- **201**: interface detecting section
- **202**: calculating section
- **203, 203A, 203B**: washing water controlling section
- **L1**: extrusion liquid
- **L2**: washing water
- **BP**: blood plasma
- **WB**: whole blood
- **BC**: blood cells
- **S**: center line

## Claims

1. An analyzer capable of analyzing different samples as a specimen, the analyzer optically analyzing a reactant of the specimen and a reagent, **characterized in** comprising:
an analysis information obtaining section for storing or obtaining specimen information including a sample type of the specimen and a specimen suction position, and specimen container information;
a liquid level estimating section for estimating a liquid level and/or an interface of the specimen;
a dispensing section for dispensing the specimen using a dispensing probe;
a washing section for washing the dispensing probe;
a calculating section for calculating a contamination adhering range of an external wall surface of the dispensingprobe, based on the sample type, the specimen suction position, and the specimen container information stored or obtained by the analysis information obtaining section as well as liquid level and/or interface information of the specimen estimated by the liquid level estimating section; and
a washing control section for controlling a washing range of the dispensing probe, based on the contamination adhering range of the external wall surface of the dispensing probe calculated by the calculating section.

2. An analyzer capable of analyzing different samples as a specimen, the analyzer optically analyzing a reactant of the specimen and a reagent, **characterized in** comprising:
an analysis information obtaining section for storing or obtaining specimen information including a sample type of the specimen and a specimen suction position;
a liquid level detecting section for detecting a liquid level and/or an interface of the specimen;
a dispensing section for dispensing the specimen using a dispensing probe;
a washing section for washing the dispensing probe;
a calculating section for calculating a contamination adhering range of an external wall surface of the dispensingprobe, basedon the sample type, the specimen suction position, and the specimen container information stored or obtained by the analysis information obtaining section as well as liquid level and/or interface information of the specimen detected by the liquid level detecting section; and
a washing control section for controlling a washing range of the dispensing probe, based on the contamination adhering range of the external wall surface of the dispensing probe calculated by the calculating section.

3. The analyzer according to claim 1 or 2, **characterized in that** the washing control section controls a lowering speed of the dispensing probe into the washing section based on the sample type of the specimen.

4. The analyzer according to any of claims 1 to 3, **characterized in that** the specimen information includes a sample type, sample viscosity, a specimen dispensing amount, a specimen suctionposition and an analysis menu information.

5. The analyzer according to any of claims 1 to 4, **characterized in that** the washing control section controls the lowering speed of the dispensing probe in accordance with a viscosity category of the specimen.

6. The analyzer according to any of claims 1 to 5, **characterized in that** the washing section comprises:
a washing vessel having an opening at an upper part thereof, the opening allowing the dispensing probe to be inserted therein;
a spout washing water supplying section for spouting washing water in a region of the upper part of the washing vessel; and
a washing water controlling section for controlling the amount of the washing water spouted from the spout washing water supplying section based on the sample type of the specimen to be washed.

7. The analyzer according to any of claims 1 to 5, **characterized in that** the washing section comprises:
a reservoir vessel for allowing overflow the washing water, the reservoir vessel having an opening at an upper part thereof for allowing the dispensing probe to be inserted therein;
an overflow vessel for discharging the overflow washing water from the reservoir vessel;
a reserve washing water supplying section for supplying the washing water to the reservoir vessel; and
a washing water controlling section for controlling the amount of the washing water supplied from the reserve washing water supplying section based on the sample type of the specimen to be washed.

8. The analyzer according to claim 7, **characterized in that** the washing water controlling section controls at least the reservoirvessel to be in an overflow state before an extrusion liquid, which is discharged from the dispensing probe to wash an internal wall surface thereof at an upper part of the reservoir vessel, falls and reaches the washing water reserved in the reservoir vessel.

9. The analyzer according to claim 7 or 8, **characterized in that** the washing water controlling section controls at least the reservoir vessel to be in an overflow state before a tip of the dispensing probe is dipped in the washing water reserved in the reservoir vessel by the lowering of the dispensing probe into the washing section.

10. The analyzer according to any of claims 7 to 9, **characterized in that** an opening of the overflow vessel is formed to have an inclined surface, which inclines downwardly from the opening of the reservoir vessel.

11. The analyzer according to claim 9 or 10, **characterized in that** the washing water controlling section performs a control to allow the washing water reserved in the reservoir vessel to overflow before the extrusion liquid discharged from the dispensing probe for washing the internal wall surface thereof falls into and reach the washing water, and after the discharging of the extrusion liquid for washing the internal wall surface from the dispensing probe ends, the washing water controlling section performs a control to allow the washing water reserved in the reservoir vessel to stop overflowing after the discharged extrusion liquid falls and reaches the washing water.

12. The analyzer according to any of claims 9 to 11, **characterized in that** the washing water controlling section performs a control to resume the overflow before the dispensing probe is lowered in the washing section and the tip of the dispensing probe is dipped in the washing water reserved in the reservoir vessel, and the washing water controlling section performs a control to stop the overflow before the dispensing probe is pulled up from the reservoir vessel.

13. The analyzer according to any of claims 7 to 12, **characterized in that** the analyzer comprises a spout washing water supplying section for spouting washing water in an upper part region of the washing vessel.

14. The analyzer according to claim 13, **characterized in that** the washing water controlling section controls the washing water spouted from the spout washing water supplying section to allow at least the reservoir vessel to be in an overflowstatewhen the washing water falls into the reservoir vessel.

15. The analyzer according to claim 13 or 14, **characterized in that** the washing control section selects, for performing washing, washing by washing-water spouting by the spout washing water supplying section and/or dip-washing with the washing water reserved in the reservoir vessel, in accordance with the sample type dispensed by the dispensing probe.

16. The analyzer according to any of claims 7 to 15, **characterized in that** the calculating section calculates a specimen contamination range of each layer of the external wall surface of the dispensing probe, based on a suction position of each layer of the specimen which is separated into layers, and the specimen container information, stored or obtained by the analysis information obtaining section, as well as liquid level position information of each layer of the specimen which is separated into layers, detected by the liquid level detecting section; the washing control section controls an insertion distance or the lowering speed of the dispensing probe to the washing section in accordance with the specimen contamination range of each layer calculated by the calculating section; and/or the washing water controlling section controls the amount of the washing water.

17. The analyzer according to any of claims 1 to 16, **characterized in that** the liquid level detecting section comprises:
a liquid level detecting part for detecting a liquid level from the change in capacitance between the dispensing probe and a metal plate disposed in the periphery of a specimen container; and
an interface detecting section for detecting a pressure during ascent or descent while performing suction of the dispensing probe in the specimen using a pressure detecting section within the dispensing probe, to detect an interface of the specimen which is separated into layers in a specimen container, based on the detected pressure change.

18. The analyzer according to any of claims 1 to 17, **characterized in that** the sample type of the specimen is blood plasma, blood serum, whole blood or a specimen which is separated into layers of blood plasma and blood cells.

19. A method for washing a dispensing probe after dispensation of a specimen, **characterized in** comprising:
a reading step of reading a specimen ID of a specimen to be dispensed and a specimen container ID;
an extracting step of extracting analysis menu information including a specimen sample type and a specimen suction position, and specimen container information;
a liquid level detecting step of detecting a specimen liquid level;
a calculating step of calculating a specimen liquid surface level, a specimen suction level and a contamination adhering range of an external wall surface of a dispensing probe, based on a specimen liquid level position detected at the liquid level detecting step, the sample type, the specimen container information, and the specimen suction position;
a sucking step of sucking out a specimen at the specimen suction level;
a discharging step of discharging the sucked specimen to a reaction container; and
a washing step of washing the dispensing probe by controlling the insertion distance and the lowering speed of the dispensing probe to the washing section and/or the amount of the washing water, based on the sample type of the specimen and the contamination adhering range of the external wall surface of the dispensing probe.

20. The method for washing a dispensing probe according to claim 19, **characterized in that** the method comprises an internal wall surface washing step of performing internal wall surface washing by the discharging of an extrusion liquid from the dispensing probe, within the washing section, prior to the washing step.

21. A method for washing a dispensing probe after dispensation of a lower layer component of a specimen which is separated into layers, **characterized in** comprising:
a reading step of reading a specimen ID of a specimen to be dispensed and a specimen container ID;
an extracting step of extracting analysis menu information including a specimen sample type and a specimen suction position for each layer, and specimen container information;
a detecting step of detecting a specimen liquid level and an interface;
a calculating step of calculating a specimen liquid surface level of each layer, a specimen suction level of each layer and a contamination adhering range of each layer of an external wall surface of a dispensing probe, based on a specimen liquid level position and an interface position detected at the detecting step, the sample type, the specimen container information, and the specimen suction position of each layer;
a sucking step of sucking out a lower layer specimen at a lower layer specimen suction level;
a discharging step of discharging the sucked specimen to a reaction container;
a first washing step of washing the dispensing probe by controlling the insertion distance and the lowering speed of the dispensing probe to the washing section and/or the amount of the washing water, based on the sample type of the lower layer specimen and the contamination adhering range of the lower layer of the external wall surface of the dispensing probe; and
a second washing step of washing the dispensing probe by controlling the insertion distance and the lowering speed of the dispensing probe to the washing section and/or the amount of the washing water, based on the sample type of the upper layer specimen and the contamination adhering range of the upper layer of the external wall surface of the dispensing probe.

22. The method for washing a dispensing probe according to claim 21, **characterized in that** the method comprises an internal wall surface washing step of performing internal wall surfacewashingby the discharging of an extrusion liquid from the dispensing probe, within the washing section, prior to the first washing step.
